# EUROPEAN PATENT APPLICATION

(11) **EP 4 637 207 A1**
(43) Date of publication of application: **22.10.2025**
(21) Application number: 25737989.1
(22) Date of filing: 22.01.2025
(51) Int. Cl.: H04W 24/10, H04W 24/08, H04W 72/231, H04L 41/5067

(54) **METHOD AND APPARATUS FOR RETRANSMITTING QOE MEASUREMENT REPORT IN WIRELESS COMMUNICATION SYSTEM**

(30) Priority: 22.01.2024 KR 20240009590
(71) Applicant: SAMSUNG ELECTRONICS CO., LTD., Yeongtong-gu Suwon-si, Gyeonggi-do 16677 (KR)
(72) Inventor: JEONG, Seungbeom, Suwon-si, Gyeonggi-do 16677 (KR); JUNG, Sangyeob, Suwon-si, Gyeonggi-do 16677 (KR)
(74) Representative: Gulde & Partner
(86) International application number: PCT/KR2025/001213
(87) International publication number: WO 2025/159490

(57) **Abstract**

The disclosure relates to a 5G or 6C communication system for supporting higher data transmission rates. The disclosure relates to QoE measurement and reporting.

## Description

### [Technical Field]

The disclosure relates to operations of a UE and a base station in a wireless communication system. More specifically, the disclosure relates to a method and an apparatus for retransmitting a QoE measurement report in a wireless communication system.

### [Background Art]

5th generation (5G) mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable a transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information associated with positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

Embodiments set forth herein are to provide an apparatus and a method capable of effectively providing services in a mobile communication system.

An aspect of the disclosure is to retransmit QoE measurement reports.

The technical subjects pursued in the disclosure may not be limited to the above-mentioned technical subjects, and other technical subjects which are not mentioned herein may be clearly understood from the following description by those skilled in the art to which the disclosure pertains.

### [Technical Solution]

Based on the above discussion, the disclosure may provide a method for processing control signals in a mobile communication system, the method including: receiving a first control signal transmitted from a base station; processing the received first control signal; and transmitting a second control signal generated based on the processing to the base station.

Specifically, an embodiment of the disclosure proposes a method performed by a terminal in a communication system, the method including: receiving a radio resource control (RRC) message, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; identifying whether a successful transmission of the QoE measurement reporting message has been confirmed, based on reception of the RRC message, a transmission of the QoE measurement reporting message being based on a configured SRB; in case that the successful transmission of the QoE measurement reporting message has not been confirmed, identifying whether RRC segmentation of the QoE measurement reporting message has been used; and in case that RRC segmentation of the QoE measurement reporting message has been used, and in case that the RRC segmentation of the QoE measurement reporting message is allowed in the changed cell group, transmitting all segments of the QoE measurement reporting message, based on the SRB to report the result of QoE measurement.

In addition, an embodiment of the disclosure proposes a method performed by a base station in a communication system, the method including: transmitting a radio resource control (RRC) message to a terminal, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; and receiving a message regarding completion of a cell group change from the terminal, wherein, in case that a transmission of the QoE measurement reporting message is not successfully performed based on a configured SRB by the terminal, RRC segmentation of the QoE measurement reporting message is used, and the RRC segmentation of the QoE measurement reporting message is allowed in the changed cell group, all segments of the QoE measurement reporting message are transmitted to the changed cell group, based on the SRB to report the result of QoE measurement.

In addition, an embodiment of the disclosure proposes a terminal in a communication system, the terminal including: a transceiver; and a controller connected to the transceiver, wherein the controller is configured to: receive a radio resource control (RRC) message, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; identify whether a successful transmission of the QoE measurement reporting message has been confirmed, based on reception of the RRC message, a transmission of the QoE measurement reporting message being based on a configured SRB; in case that the successful transmission of the QoE measurement reporting message has not been confirmed, identify whether RRC segmentation of the QoE measurement reporting message has been used; and in case that RRC segmentation of the QoE measurement reporting message has been used, and in case that the RRC segmentation of the QoE measurement reporting message is allowed in the changed cell group, transmit all segments of the QoE measurement reporting message, based on the SRB to report the result of QoE measurement.

In addition, an embodiment of the disclosure proposes a base station in a communication system, the base station including: a transceiver; and a controller connected to the transceiver, wherein the controller is configured to: transmit a radio resource control (RRC) message to a terminal, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; and receive a message regarding completion of a cell group change from the terminal, wherein, in case that a transmission of the QoE measurement reporting message is not successfully performed based on a configured SRB by the terminal, RRC segmentation of the QoE measurement reporting message is used, and the RRC segmentation of the QoE measurement reporting message is allowed in the changed cell group, all segments of the QoE measurement reporting message are transmitted to the changed cell group, based on the SRB to report the result of QoE measurement.

### [Advantageous Effects]

Embodiments set forth herein provide an apparatus and a method capable of effectively providing services in a mobile communication system. Specifically, the disclosure provides an apparatus and a method capable of retransmitting QoE measurement reports.

Advantageous effects obtainable from the disclosure may not be limited to the above-mentioned effects, and other effects which are not mentioned herein may be clearly understood from the following description by those skilled in the art to which the disclosure pertains.

### [Description of Drawings]

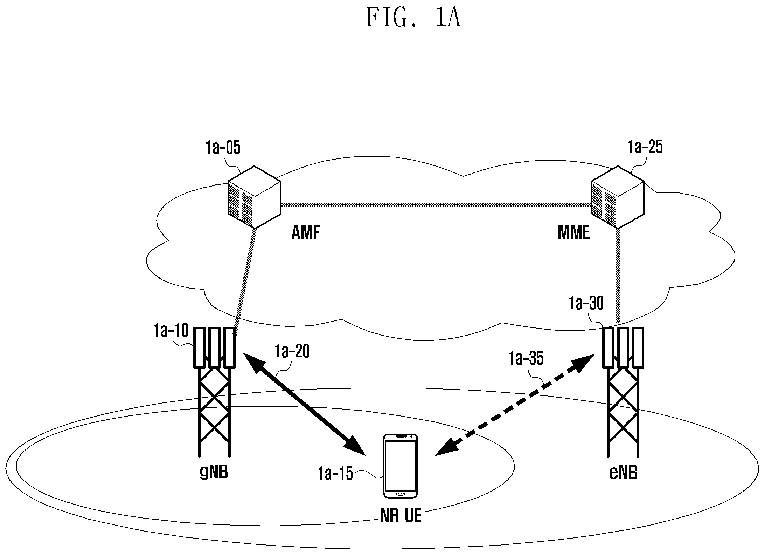

FIG. 1A illustrates a structure of a mobile communication system according to an embodiment of the disclosure.

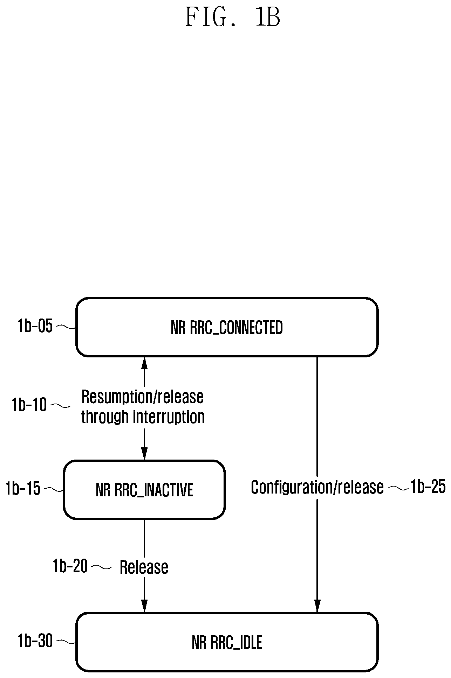

FIG. 1B illustrates radio access state transition in a mobile communication system according to an embodiment of the disclosure.

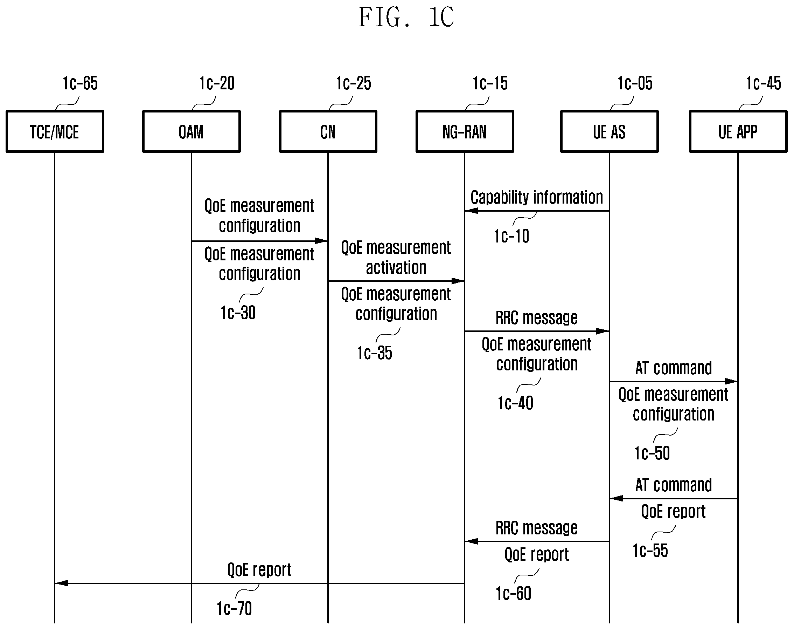

FIG. 1C illustrates a procedure of configuring and/or reporting signaling-based quality-of-experience (QoE) measurement according to an embodiment of the disclosure.

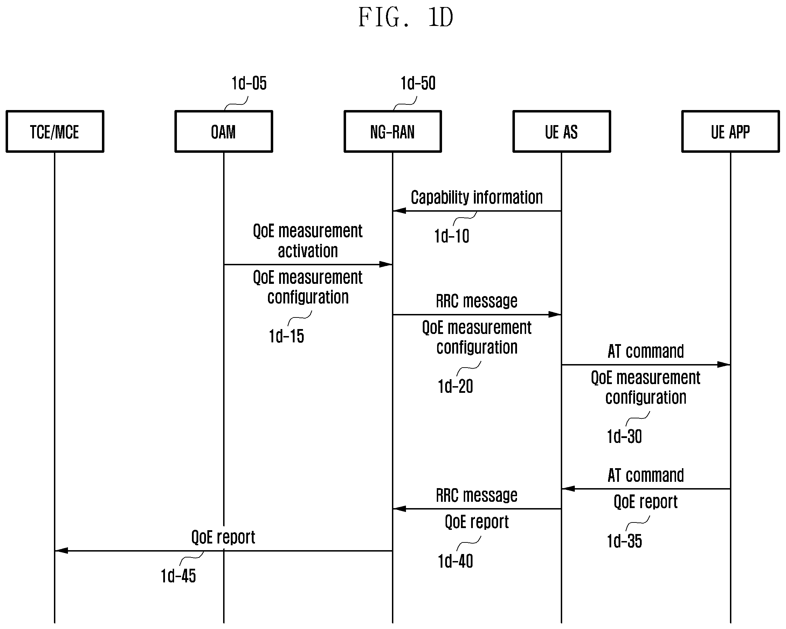

FIG. 1D illustrates a procedure of configuring and/or reporting management-based QoE measurement according to an embodiment of the disclosure.

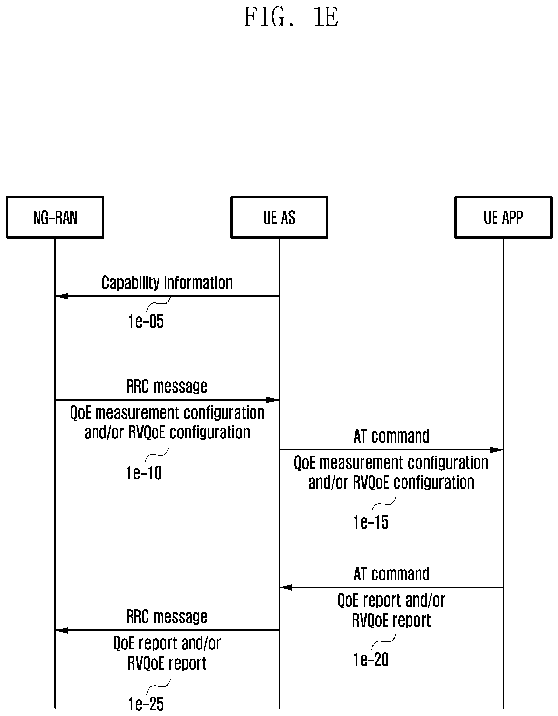

FIG. 1E illustrates a procedure of configuring and/or reporting radio access network (RAN) visible QoE measurement according to an embodiment of the disclosure.

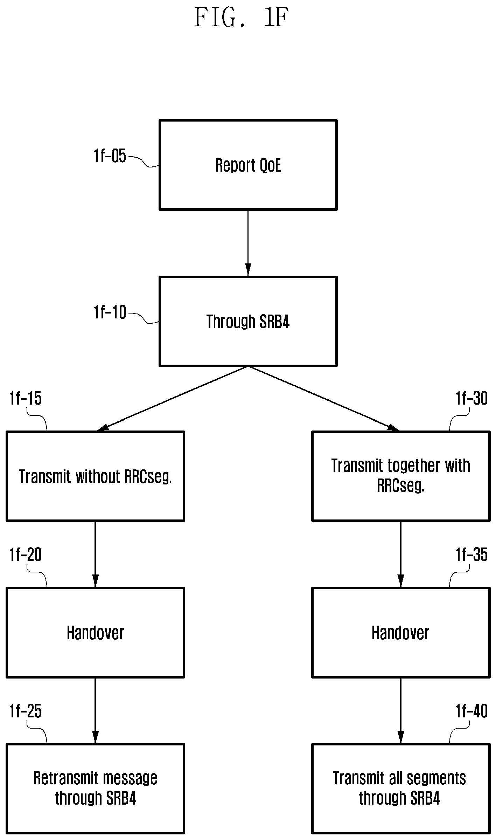

FIG. 1F illustrates a procedure in which a UE retransmits a QoE measurement report when performing a handover according to an embodiment of the disclosure.

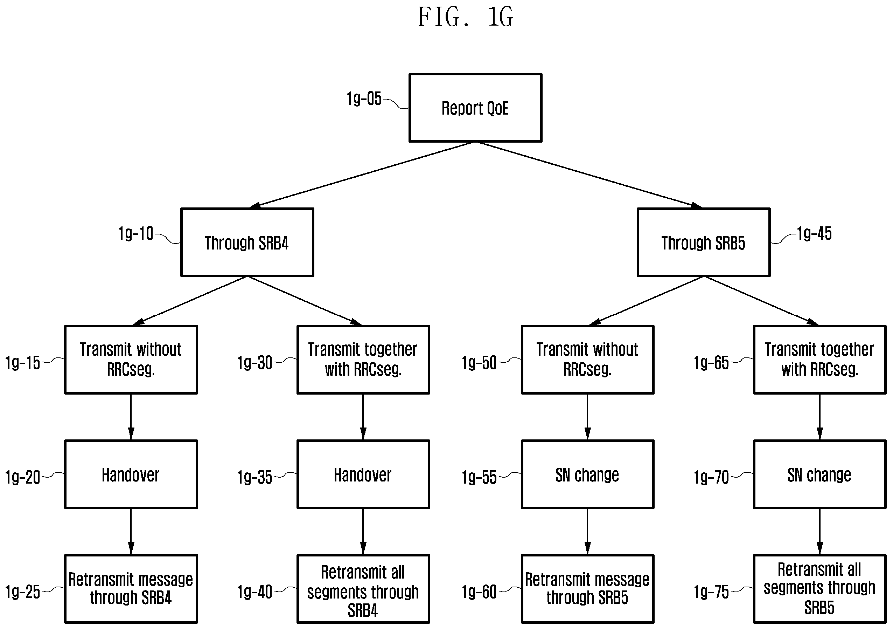

FIG. 1G illustrates a procedure in which a UE retransmits a QoE measurement report when performing a handover (master node (MN) change) or secondary node (SN) change according to an embodiment of the disclosure.

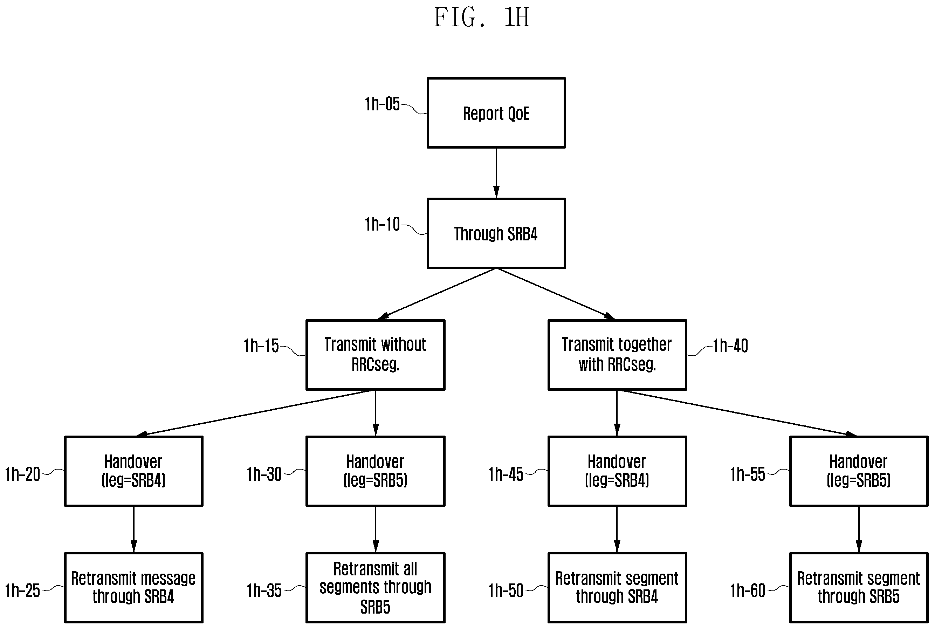

FIG. 1H illustrates a procedure in which a UE retransmits a QoE measurement report according to the configured signaling radio bearer (SRB) when performing a handover according to an embodiment of the disclosure.

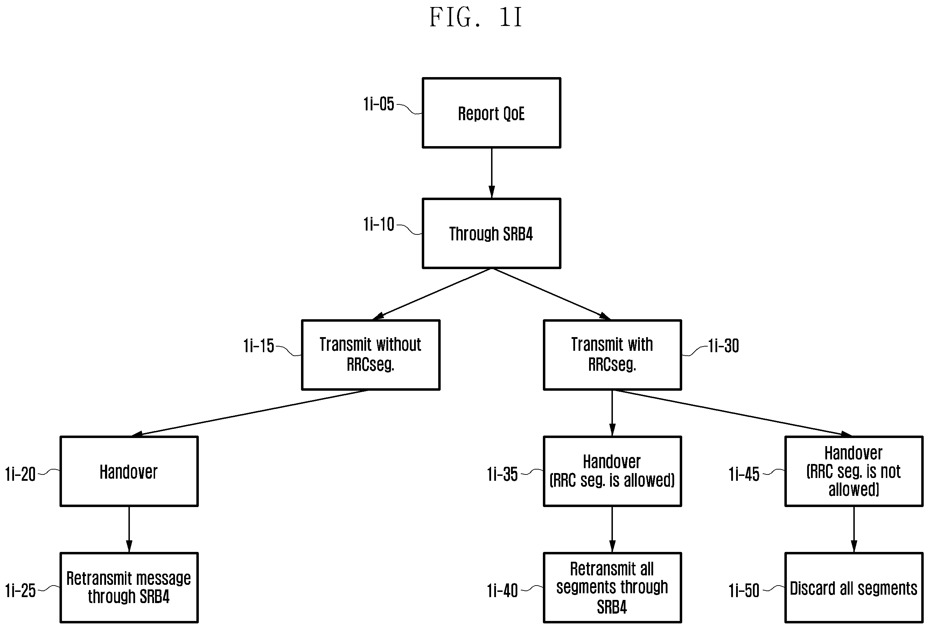

FIG. 1I illustrates a procedure in which a UE retransmits a QoE measurement report according to whether a new base station allows radio resource control (RRC) segmentation or not when performing a handover according to an embodiment of the disclosure.

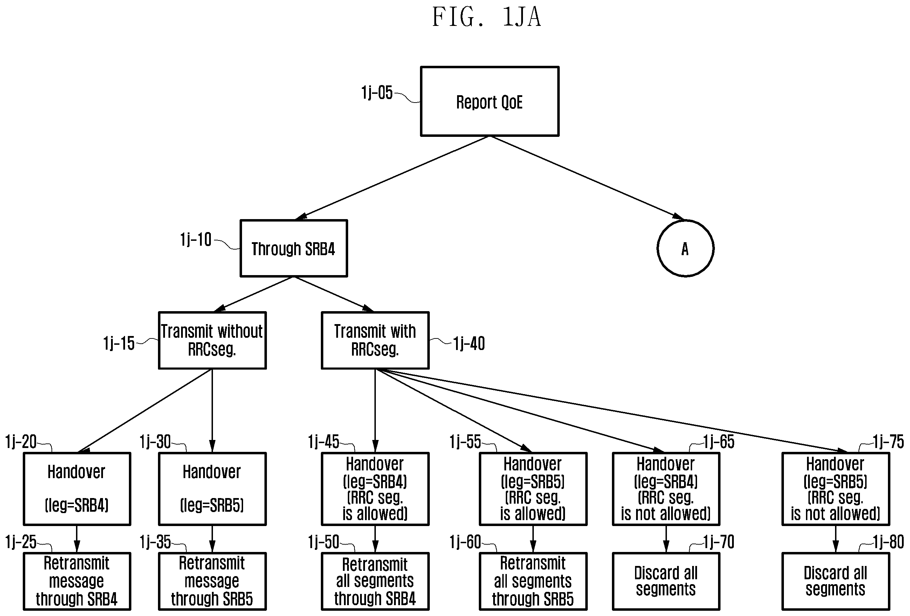

FIG. 1JA illustrate a procedure in which a UE retransmits a QoE measurement report according to the configured SRB and according to whether a new base station allows RRC segmentation or not, when performing a handover (MN change) or SN change according to an embodiment of the disclosure.

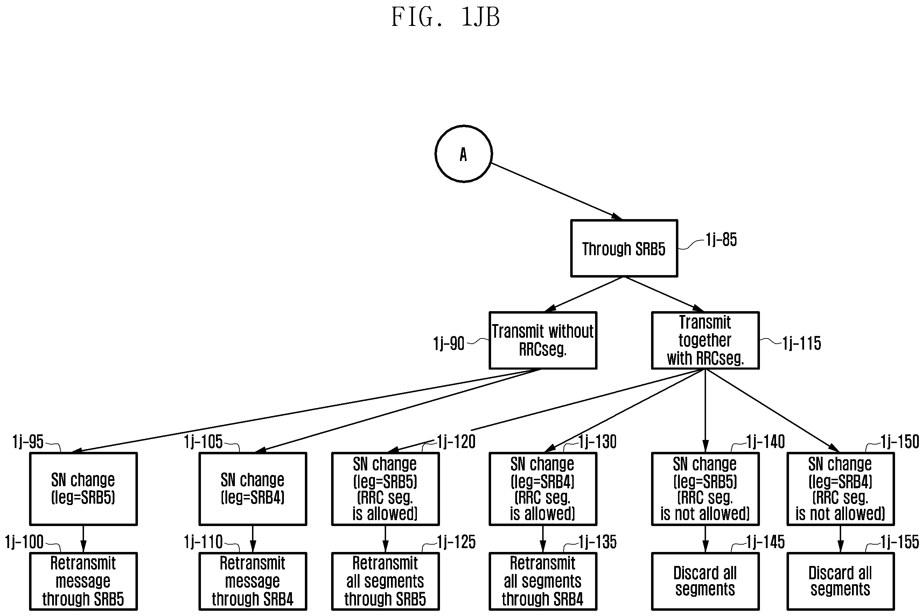

FIG. 1JB illustrate a procedure in which a UE retransmits a QoE measurement report according to the configured SRB and according to whether a new base station allows RRC segmentation or not, when performing a handover (MN change) or SN change according to an embodiment of the disclosure.

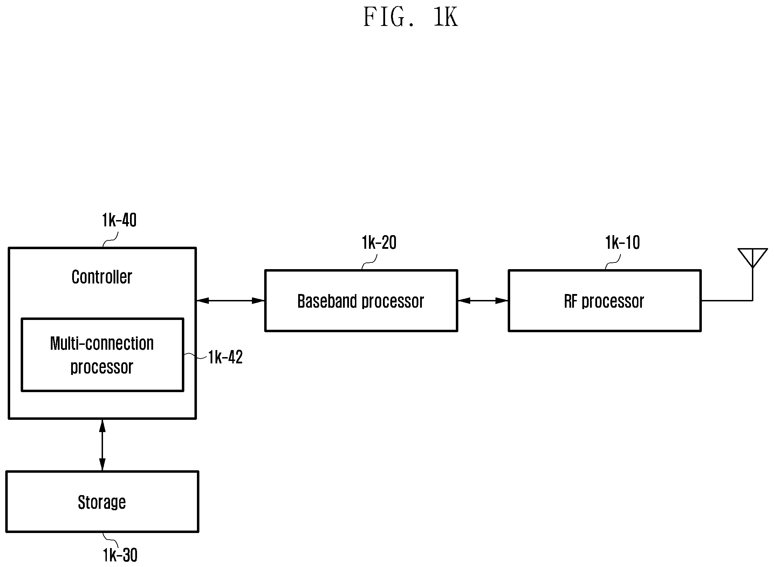

FIG. 1K illustrates a structure of a UE according to an embodiment of the disclosure.

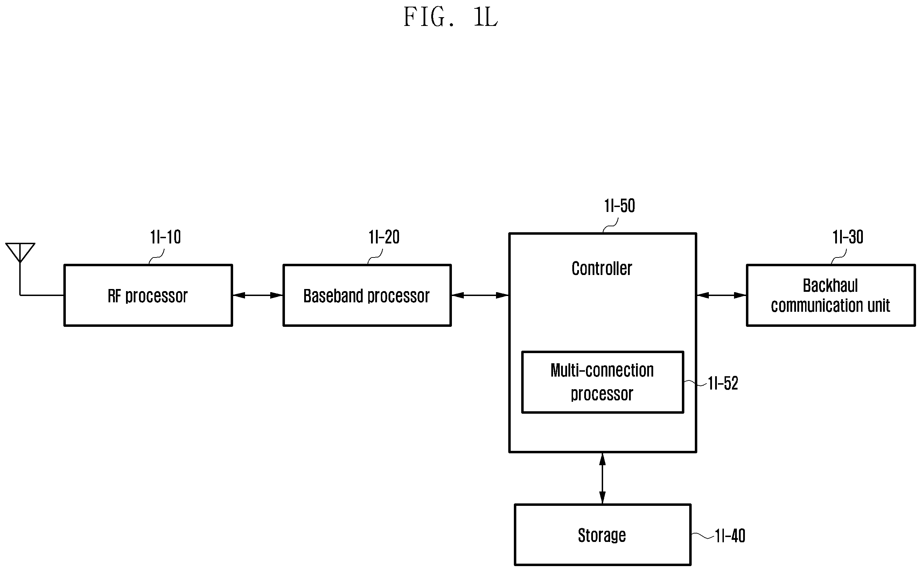

FIG. 1L illustrates a structure of a base station according to an embodiment of the disclosure.

### [Mode for Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to device elements (e.g., control unit, processor, artificial intelligence (AI) model, encoder, decoder, autoencoder (AE), and neural network (NN) model), terms referring to data (e.g., signal, feedback, report, reporting, information, parameter, value, bit, and codeword), and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, exemplary embodiments of the disclosure will be described in detail with reference to the accompanying drawings. It should be noted that, in the accompanying drawings, the same or like elements are designated by the same or like reference signs as much as possible. In addition, a detailed description of known functions or configurations that may make the subject matter of the disclosure unclear will be omitted. In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors.

Therefore, the "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and parameters.

The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, terms and names defined in the 3rd generation partnership project long term evolution (3GPP LTE) or new radio (NR) standards are used for the sake of descriptive convenience. However, the disclosure is not limited by these terms and names, and may be applied in the same way to systems that conform other standards.

In the following description, a base station (BS) is an entity that allocates resources to terminals, and may be at least one of a radio access network (RAN) node, a next generation node B (gNode B, gNB), an evolved node B (eNode B, eNB), a Node B, a wireless access unit, a base station controller, and a node on a network. In the disclosure, the term "eNB" may be interchangeably used with the term "gNB" for the sake of descriptive convenience. That is, a base station described as "eNB" may refer to "gNB".

A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (the 5G mobile communication standard). Also, the disclosure may be applied to intelligent services (e.g., smart homes, smart buildings, smart cities, smart cars or connected cars, healthcare, digital education, retail business, security and safety-related services, etc.) on the basis of 5G communication technology and Internet of things (IoT)-related technology. In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a terminal (or UE) transmits data or control signals to a base station (or eNB or gNB), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to an embodiment, eMBB aims at providing a data rate higher than that supported by existing LTE, LTE-A, or LTE-Pro. For example, in the 5G communication system, eMBB must provide a peak data rate of 20 Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5ms, and may also require a packet error rate of 10⁻⁵ or less. Therefore, for the services supporting URLLC, a 5G system must provide a transmit time interval (TTI) shorter than those of other services, and also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, the above-described mMTC, URLLC, and eMBB are merely examples of different types of services, and service types to which the disclosure is applied are not limited to the above examples.

Furthermore, in the following description, LTE, LTE-A, LTE Pro, 5G (or NR), or 6G systems will be described by way of example, but the embodiments of the disclosure may also be applied to other communication systems having similar technical backgrounds or channel types. In addition, based on determinations by those skilled in the art, the embodiments of the disclosure may be applied to other communication systems through some modifications without significantly departing from the scope of the disclosure.

FIG. 1A illustrates a structure of a mobile communication system according to an embodiment of the disclosure.

Referring to FIG. 1A, a radio access network of a mobile communication system (new radio, NR) according to an embodiment of the disclosure may include a base station (next generation Node B, hereinafter gNB) 1a-10 and an access and mobility management function (AMF) (new radio core network) 1a-05. A user terminal (new radio user equipment, hereinafter NR UE or terminal) 1a-15 may access an external network via the gNB 1a-10 and the AMF 1a-05. The mobile communication system according to an embodiment of the disclosure may be a next generation wireless mobile communication system, and the gNB may be a next generation radio base station.

In FIG. 1A, the gNB corresponds to an evolved node B (eNB) of a conventional LTE system. The gNB may be connected to the NR UE through a radio channel and provide outstanding services as compared to a conventional node B (1a-20). Iin the next-generation mobile communication system according to an embodiment of the disclosure, since all user traffic is serviced through a shared channel, a device that collects state information, such as buffer statuses, available transmit power states, and channel states of UEs, and performs scheduling accordingly is required, and the gNB 1a-10 serves as the device. In general, one gNB may control multiple cells. In order to implement ultrahigh-speed data transfer beyond the current LTE, the next-generation mobile communication system may provide a wider bandwidth than the existing maximum bandwidth, may employ an orthogonal frequency division multiplexing (hereinafter referred to as OFDM) as a radio access technology, and may additionally integrate a beamforming technology therewith. Furthermore, the next generation wireless mobile communication system may employ an adaptive modulation & coding (hereinafter referred to as AMC) scheme for determining a modulation scheme and a channel coding rate according to a channel state of a UE.

The AMF 1a-05 may perform functions such as mobility support, bearer configuration, and QoS configuration. The AMF is a device responsible for various control functions as well as a mobility management function for a UE, and may be connected to multiple base stations. In addition, the mobile communication system according to an embodiment of the disclosure may interwork with the existing LTE system, and the AMF 1a-05 may be connected to a mobility management entity (MME) 1a-25 via a network interface. The MME is connected to an eNB 1a-30 that is an existing base station. A UE supporting LTE-NR dual connectivity may transmit/receive data while maintaining connections to both the gNB and the eNB (1a-35).

FIG. 1Bi illustrates radio access state transition in a mobile communication system according to an embodiment of the disclosure.

In the mobile communication system according to an embodiment of the disclosure, a UE may have three types of radio resource control (RRC) states or RRC modes. A connected mode (RRC_CONNECTED) 1b-05 is a radio access state in which the UE may transmit and receive data. A standby mode (RRC_IDLE) 1b-30 is a radio access state in which the UE monitors whether paging is transmitted to the UE. The connected mode or the standby mode are radio access states that are also applicable to the conventional LTE system, and the technical particulars thereof may be the same as those of the LTE system. The mobile communication system according to an embodiment of the disclosure may be a next generation mobile communication system.

In the mobile communication system according to an embodiment of the disclosure, an inactive radio access state (RRC_INACTIVE) 1b-15 is newly defined. In this radio access state, UE context is maintained in both the base station and the UE, and radio access network (RAN)-based paging may be supported. The characteristics of the new radio access state may be enumerated as given below.
- Cell re-selection mobility;
- CN (core network) - NR RAN connection (both C/U-planes (control plane/user plane)) has been established for UE;
- The UE AS (Access Stratum) context is stored in at least one gNB and the UE;
- Paging is initiated by NR RAN;
- RAN-based notification area is managed by NR RAN;
- NR RAN knows the RAN-based notification area which the UE belongs to;

The UE in an inactive radio access state according to an embodiment of the disclosure may transition to a connected mode or a standby mode by using a specific procedure. For example, the UE may transition from an inactive mode to a connected mode according to a resume procedure, and may transition from a connected mode to an inactive mode by using a release procedure including suspend configuration information (1b-10). This procedure is performed via one or more RRC messages transmitted and received between the UE and the base station, and may include one or more operations. Furthermore, via the release procedure after the resume, the UE may transition from an inactive mode to a standby mode (1b-20). The transition between a connected mode and a standby mode may follow the conventional LTE technology. That is, the transition between the modes may be achieved via an establishment or release procedure.

FIG. 1C illustrates a procedure of configuring and/or reporting signaling-based quality-of-experience (QoE) measurement according to an embodiment of the disclosure.

In the embodiment of FIG. 1C, the UE access stratum (AS) 1c-05 may be defined as a UE, and the NG-RAN 1c-15 may be defined as a base station. The UE AS may be defined as the UE's AS layer, and the UE APP 1c-45 may be defined as a UE application layer. Operations performed by the UE AS and UE APP may be interpreted as operations performed by the UE.

Referring to FIG. 1C, in step 1c-10, the UE AS may transmit capability information to the NG RAN. The UE AS 1c-05 may transmit information (for example, qoe-Streaming-MeasReport, qoe-MTSI-MeasReport, qoe-VR-MeasReport) indicating whether QoE measurement is supported with regard to each service type (for example, streaming, multimedia telephony service for IMS (MTSI) (Internet protocol (IP) multimedia subsystem), virtual reality (VR)) to the base station (or NG-RAN) 1c-15 through a UE capability message (for example, UECapabilityInformation). Before the UE transmits a UE capability message to the base station, the base station may transmit a message (for example, UECapabilityEnquiry) for requesting a UE capability message to the UE. In addition, the UE may report, to the base station, whether RAN visible QoE measurement is supported (for example, ran-VisibleQoE-Streaming-MeasReport, ran-VisibleQoE-VR-MeasReport) with regard to each service type (for example, streaming, VR) through the UE capability message. In addition, the UE may report, to the base station, whether UL RRC segmentation of the QoE report message is supported (for example, ul-MeasurementReportAppLayer-Seg) through the UE capability message. The UE capability message may include abstract syntax notation one ASN.1 information as in Table 1 below. Descriptions of related parameters (for example, QoE measurement parameters) may be given in Table 2 below.

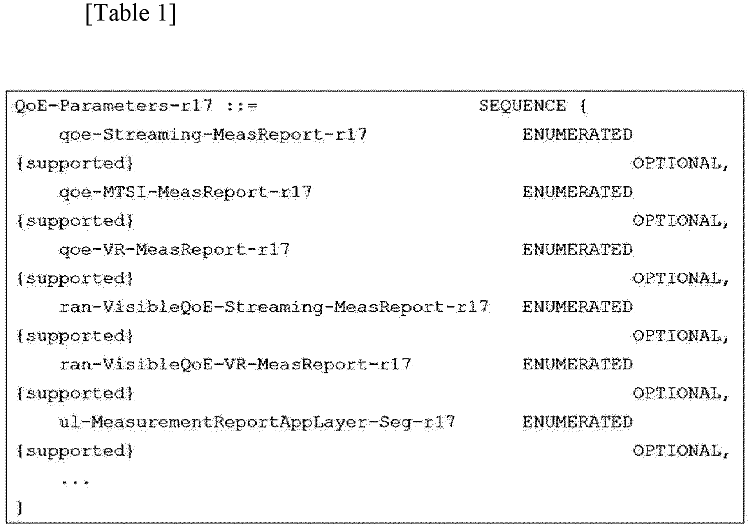

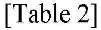

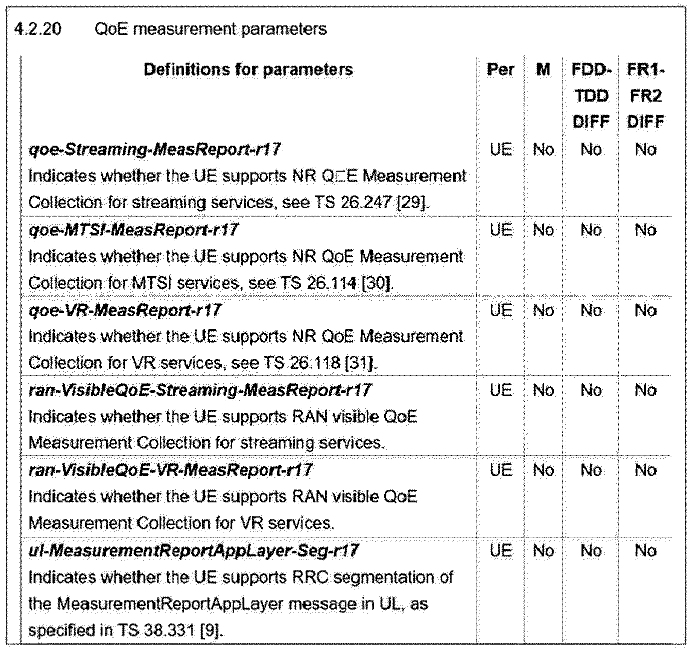

Service types supported in LTE may include at least one from among streaming and MTSI. In the case of NR, it has been defined in Rel-17 that, in addition to the service types that can be supported in LTE, the VR service is additionally supported, it has been defined, in later releases, services such as multimedia broadcast multicast services (MBMS) and extended reality (XR) may be additionally supported. Services that can be supported in NR systems are not limited to the above example.

In step 1c-30, the operations administration and maintenance (OAM) 1c-20 may configure QoE measurement for the core network (CN) 1c-25. The OAM may provide or transmit QoE measurement configuration information (for example, QoE measurement configuration) to the CN (1c-30).

Upon receiving the QoE measurement configuration information, the CN 1c-25 may activate QoE measurement in step 1c-35. The CN may activate QoE measurement by transmitting the QoE measurement configuration information to the base station 1c-15 (1c-35).

In step 1c-40, the base station 1c-15 may transfer or transmit QoE configuration information to the UE AS 1c-05 through an RRC message (for example, RRCReconfiguration or RRCResume message) (1c-40). The RRC message may include an information element (IE) (for example, APPLayerMeasConfig) as in Table 3 below. Descriptions of related parameters may be given in Table 4 below.

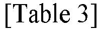

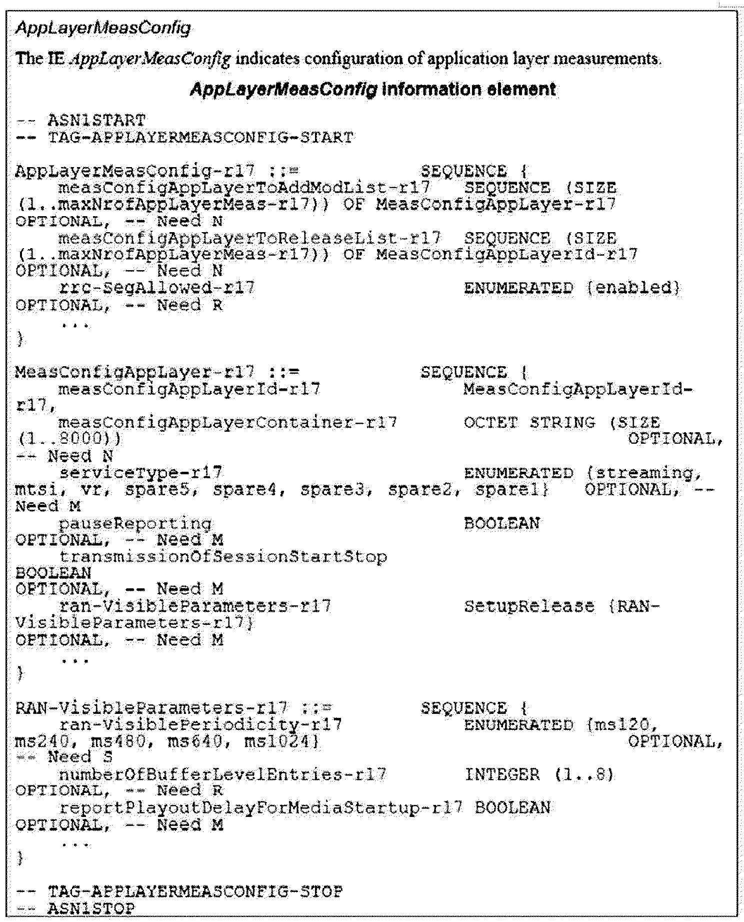

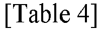

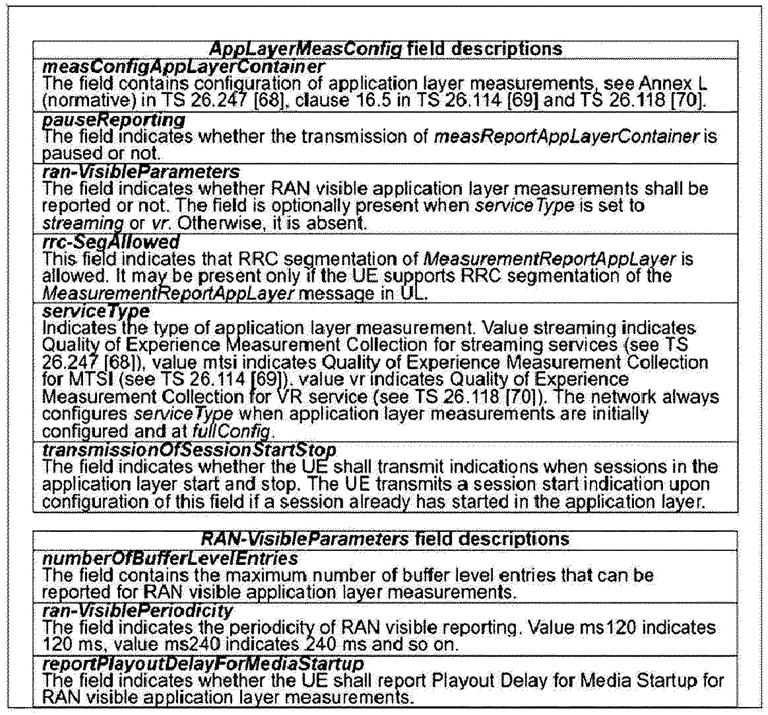

According to an embodiment of the disclosure, operations of the UE AS 1c-05 which has received QoE configuration from the base station, through the RRC message, may be given in Table 5 below:

**[Table 5]**

| | | | |
|---|---|---|---|
| | | | 5.3.5.13d Application layer measurement configuration |
| The UE shall: | | | |
| | 1 > if *measConfigAppLayerToReleaseList* is included in *appLayerMeasConfig* within *RRCReconfiguration* or *RRCResume.* | | |
| | | 2>for each *measConfigAppLyerId* value included in the *measConfigAppLayerToReleaseList*: | |
| | | | 3>forward the *measConfigAppLayerId* and inform upper layers about the release of the application layer measurement configuration including any RAN visible application layer measurement configuration; |
| | | | 3>discard any application layer measurement report received from upper layers; |
| | | | 3>consider itself not to be configured to send application layer measurement report for the *measConfigAppLayerId.* |
| | 1> if *measConfigAppLayerToAddModList* is included in *appLayerMeasConfig* within *RRCReconfiguration* or *RRCResume*: | | |
| | | 2>for each *measConfigAppLayerId* value included in the *measConfigAppLayerToAddModList*: | |
| | | | 3>if *measConfigApplayerContainer* is included for the corresponding *MeasConfigAppLayer* configuration: |
| | | | 4> forward the *measConfigAppLayerContainer,* the *measConfigAppLayerId* and the *serviceType* to upper layers considering the *serviceType*: |
| | | | 3>consider itself to be configured to send application layer measurement report for the *measConfigAppLayerId* in accordance with 5.1.16; |
| | | | 3>forward the *transmissionOfSessionStartStop*, if configured, and *measConfigAppLayerId* to upper layers considering the *serviceType*; |
| | | | 3>if *ran-VisibleParameters* is set to setup and the parameters have been received: |
| | | | 4> forward the *measConfigAppLayerId,* the *ran-VisiblePeriodicity,* if configured, the *numberOfBufferLevelEntries,* if configured, and the *reportPlayoutDelayForMediaStartup,* if configured, to upper layers considering the *serviceType*; |

| | | | |
|---|---|---|---|
| | | 3 >else if *ran-VisibleParameters* is set to release: | |
| | | 4> forward the *measConfigAppLayerId* and inform upper layers about the release of the RAN visible application layer measurement configuration; | |
| | | 3>if *pauseReporting* is set to *true:* | |
| | | 4> if at least one segment, but not all segments, of a segmented *MeasurementReportAppLayer* message containing an application layer measurement report associated with the *measConfigAppLaverId* has been submitted to lower layers for transmission: | |
| | | | 5>submit the remaining segments of the *MeasurementReportAppLayer* message to lower layers for transmission; |
| | | 4> suspend submitting application layer measurement report containers to lower layers for the application layer measurement configuration associated with the *measConfigAppLayerId*; | |
| | | 4> store any previously or subsequently received application layer measurement report containers associated with the *measConfigAppLayerId* for which no segment, or full message, has been submitted to lower layers for transmission; | |
| | | 3>else if *pauseReporting* is set to *false* and if transmission of application layer measurement report containers has previously been suspended for the application layer measurement configuration associated with the *measConfigAppLayerId*: | |
| | | 4> submit stored application layer measurement report containers to lower layers, if any, for the application layer measurements configuration associated with the *measConfigAppLayerId*; | |
| | | 4> resume submitting application layer measurement report containers to lower layers for the application layer measurement configuration associated with the *measConfigAppLayerId*; | |
| | NOTE 1: The UE may discard reports when the memory reserved for storing application layer measurement reports becomes full. | | |
| | NOTE 2: The transmission of RAN visible application layer measurement reports is not paused when *pauseReporting* is set to *true.* | | |

The UE AS 1c-05 may provide or transmit QoE measurement configuration information to the UE APP 1c-45 in step 1c-50. The UE AS may use an AT command in this regard. In the case of a QoE measurement configuration included in measConfigAppLayerToAddModList, the UE AS 1c-05 may transfer all or part of QoE measurement configuration information to the UE's upper layer or application layer (UE APP) 1c-45 through the AT command (1c-50). In addition, the UE AS 1c-05 may send an AT command to the UE APP 1c-45 so as to instruct or command the same to delete stored configuration information with regard to the QoE measurement configuration included in measConfigAppLayerToAddReleaseList.

The UE APP 1c-45 may perform QoE measurement according to the received configuration information. In addition, the UE APP 1c-45 may send a QoE measurement report (for example, QoE report) including the result of measurement according to the configuration information in step 1c-55d to the UE AS 1c-05 through the AT command (1c-55).

In step 1c-60, the UE AS 1c-05 may report the QoE measurement result to the base station 1c-15 through an RRC message (for example, MeasurementReportAppLayer message) (1c-60). For the QoE measurement result report, signaling radio bearer (SRB) 4 may be used. The MeasurementReportAppLayer message may include ASN.1 information as in Table 6 below. Descriptions of related parameters may be given in Table 7 below.

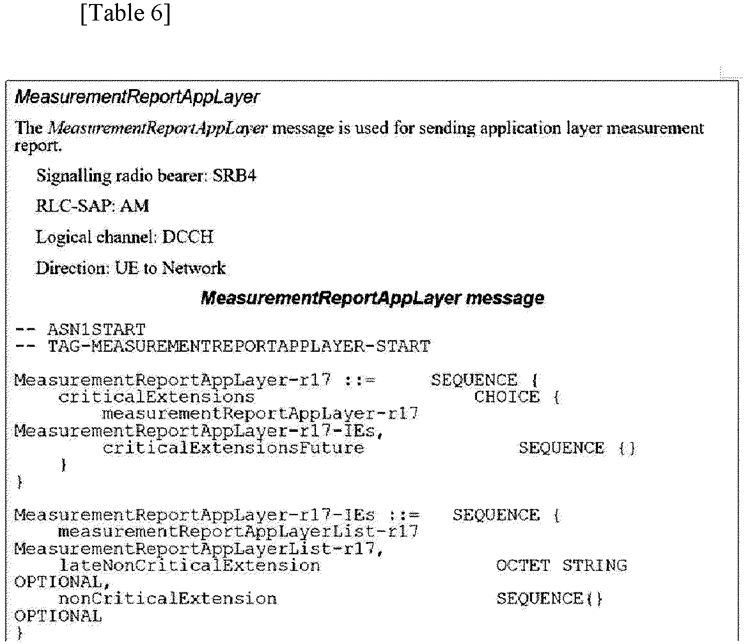

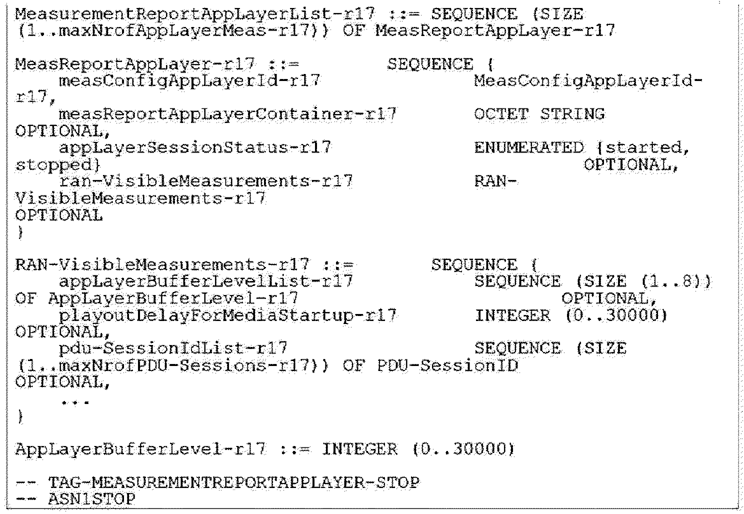

**[Table 7]**

| ***MeasurementReportAppLayer* field descriptions** |
|---|
| ***appLayerBufferLevelList*** |
| The field indicates a list of application layer buffer levels, and each *AppLayerBufferLevel* indicates the application layer buffer level in ms. Value 0 corresponds to 0ms, value 1 corresponds to 10ms, value 2 corresponds to 20 ms and so on. If the buffer level is larger than the maximum value of 30000 (5 minutes), the UE reports 30000. |
| **sppLayerSessionStatus** |
| Indicates that an application layer measurement session in the application layer starts or ends. |
| ***playoutDelayForMediaStartup*** |
| indicates the application layer playout delay for media start-up in ms. Value 0 corresponds to 0ms, value 1 corresponds to 1ms, value 2 corresponds to 2 ms and so on. If the playout delay for media start-up is larger than the maximum value of 30000ms, the UE reports 30000. |
| ***measReportAppLayerContainer*** |
| The field contains application layer measurement report, see Annex L (normative) in TS 26.247 [68], clause 16.5 in TS 26.114 [69] and TS 26.118 [70]. |
| ***pdu-SessionIdList*** |
| Contains the identity of the PDU session, or the identities of the PDU sessions, used for application data flows subject to the RAN visible application layer measurements. |

The procedure in which the UE AS 1c-05 reports the QoE measurement result may be given in Table 8 below. In Table 8 below, the UE corresponds to the UE or UE AS 1c-05, and the network corresponds to the NG-RAN or the base station.

**[Table 8]**

| | | | |
|---|---|---|---|
| 5.7.16 Application layer measurement reporting | | | |
| 5.7.16.1 General | | | |
| 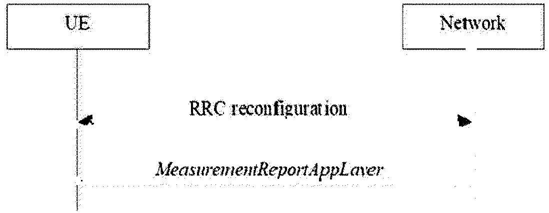 | | | |
| **Figure 5.7.16.1-1: Application layer measurement reporting** | | | |
| The purpose of this procedure is to send application layer measurement reports to the network. | | | |
| 5.7.16.2 Initiation | | | |
| A UE capable of application layer measurement reporting in RRC CONNECTED may initiate the procedure when configured with application layer measurement. i.e. when *measLayerMeasConfig* and SRB4 have been configured by the network. | | | |
| Upon initiating the procedure, the UE shall: | | | |
| | 1>for each *measConfigAppLayerId*: | | |
| | | 2>it the UE AS has received application layer measurement report trom upper layers which has not been transmitted; and | |
| | | 2> it the application layer measurement reporting has not been suspended for the *measConfigAppLayerId* associated with the application layer measurement report according to clause 5.3.5.13d: | |
| | | | 3>set the *measReportAppLayerContainer* in the *MeasurementReportAppLayer* message to the received value in the application layer measurement report; |
| | 2>set the *meosConfigAppLayerId* in the *MeasurementReportAppLayer* message to the value of the *measConfigAppLayerId* received together with application layer measurement report information; | | |
| | 2> if session start or stop information has been received from upper layers for the *measConfigAppLayerId*: | | |
| | | 3> set the *appLayerSessionStatus* to the received value of the application layer measurement information; | |
| | 2> if RAN visible application layer measurement report has been received from upper layers: | | |
| | | 3>for each *appLaverBufferLevel* value in the received RAN visible application layer measurement report: | |
| | | | 4> set the *appLayerBufferLevel* values in the *appLayerBufferLevelList* to the buffer level values received from the upper layer in the order with the first *appLayerBufferLevel* value set to the newest received buffer level value, the second *appLayerBufferLevel* value set to the second newest received buffer level value, and so on until all the buffer level values received from the upper layer have been assigned or the maximum number of values have been set according to *appLayerBufferLevel,* if configured; |
| | | 3> set the *playoutDelayForMediaStartup* to the received value in the RAN visible application layer measurement report, if any; | |
| | | 3> for each PDU session ID value indicated in the received RAN visible application layer measurement report, if any: | |
| | | | 4> set the *PDU-SessionlD* field in the *pdu-SessionIdList* to the indicated PDU session ID value; |
| | 2> if the encoded RRC message is larger than the maximum supported size of one PDCP SDU specified in TS 38.323 [5]: | | |
| | | 3> if the RRC message segmentation is enabled based on the field *rrc-SegAlowed* received in *appLayerMeasConfig*: | |
| | | | 4> initiate the UL message segment transfer procedure as specified in clause 5.7.7; |
| | | 3> else: | |
| | | | 4> discard the RRC message: |
| | 2> else: | | |
| | | 3> submit the *MeasurementReportAppLayer* message to lower layers for transmission upon which the procedure ends. | |

The base station 1c-15 may transfer the received measurement result report to the final server (trace collection entity (TCE) or measurement collection entity (MCE)) 1c-65 which collects measurement results in step 1c-70 (1c-70).

FIG. 1D illustrates a procedure of configuring and/or reporting management-based QoE measurement according to an embodiment of the disclosure.

In the embodiment of FIG. 1D, the UE AS 1d-05 may be defined as a UE, and the NG-RAN 1d-15 may be defined as a base station. The UE AS 1d-05 may be defined as the UE's AS layer, and the UE APP 4-45 may be defined as a UE application layer. Operations performed by the UE AS 4-05 and UE APP 4-45 may be interpreted as operations performed by the UE.

Referring to FIG. 1D, operations performed in the management-based QoE configuration and/or reporting procedure may be similar to the signaling-based QoE configuration and/or reporting procedure described with reference to FIG. 1C. Therefore, descriptions of operations in FIG. 1D, which are identical to operations in FIG. 1C, or which have already been described, may be omitted herein, and descriptions made with reference to FIG. 1C may be referenced instead. In the disclosure, the management-based QoE configuration and/or reporting procedure may be described while focusing on differences from the signaling-based procedure.

In step 1d-40, the UE AS 1d-05 may transmit capability information to the NG-RAN1d-50 (1d-10). Regarding descriptions of operation 1d-10 and related operations, descriptions of operation 1c-10 and related operations in FIG. 1C will be referenced.

The OAM may transmit a QoE measurement configuration (for example, QoE measurement configuration) to the NG-RAN in step 1d-15, thereby activating QoE measurement. In the management-based QoE configuration and/or reporting procedure, the OAM 1d-05 may directly transmit the QoE measurement configuration to the base station 1d-50 without going through the CN, thereby instructing the base station to activate the UE's QoE measurement (1d-15).

The base station 1d-50 may discover a UE or multiple UEs conforming to at least one condition (for example, at least one from among area scope, application layer capability, and service type). The base station 1d-50 may transmit or transfer the QoE measurement configuration to the single UE or one of multiple UEs discovered in step 1d-20. The base station may transmit or transfer the QoE measurement configuration to the UE through an RRC message (for example, RRCReconfiguration message or RRCResume) (1d-20).

The UE may transmit an AT command including the QoE measurement configuration to the UE APP in step 1d-30. The UE APP may perform measurement and may transmit an AT command including the measurement result (for example, QoE report) to the UE AS in step 1d-35. The UE AS may transmit an RRC message including the QoE report to the NG-RAN 1d-50. The NG-RAN may transmit the QoE report to the TCE or MCE in step 1d-45. Regarding detailed descriptions of 1d-30, 1d-35, 1d-40, and 1d-45, descriptions of corresponding operations in FIG. 1C will be referenced.

FIG. 1E illustrates a procedure of configuring and reporting radio access network (RAN) visible QoE measurement according to an embodiment of the disclosure.

In the embodiment of FIG. 1E, the UE AS may be defined as a UE, and the NG-RAN may be defined as a base station. The UE AS may be defined as the UE's AS layer, and the UE APP may be defined as a UE application layer. Operations performed by the UE AS and UE APP may be interpreted as operations performed by the UE.

According to an embodiment of the disclosure, in case of following a scheme related to the signaling-based QoE configuration and/or reporting procedure in FIG. 1C or the management-based QoE configuration and/or reporting procedure in FIG. 1D, QoE measurement may be configured by the OAM, the QoE measurement report generated according to the QoE measurement configuration may be collected by the TCE or MCE, and the QoE measurement report may be used by the operator for network optimization.

The base station may have difficulty in reading or understanding the QoE measurement report transmitted by the UE. The MeasurmentReportAppLayer message may have the measurement report generated by the UE's application layer included in measurementReportAppLayerContaine. However, the base station or the base station's RRC layer may have difficulty in reading or understanding the QoE measurement report because the same is stored in an OCTEC STRING format.

In order to solve the problem of having difficulty in reading or understanding the QoE measurement report, RAN visible QoE (RVQoE) measurement may be used in 3GPP such that the base station can read the UE's QoE measurement report and use the QoE measurement report for network optimization (for example, radio resource management).

According to an embodiment of the disclosure, QoE measurement may be defined while being limited to a specific service type (for example, streaming or VR). The UE may report, to the base station, information indicating whether RVQoE measurement is supported or not with regard to each service type (for example, streaming or VR). In step 1e-05. A UECapabilityInformation message may be used to this end. For example, the UE may transmit the UECapabilityInformation message having parameter ran-VisibleQoE-Streaming-MeasReport included or configured therein with regard to the streaming service to the base station. With regard to the VR service, the UE may transmit the UECapabilityInformation message having parameter ran-VisibleQoE-VR-MeasReport included or configured therein.

As the UE includes or configures a parameter regarding whether RVQoE measurement is supported or not, the base station may recognize whether RVQoE measurement is supported or not with regard to each service type of the UE. The base station may generate a RVQoE measurement configuration, based on whether RVQoE measurement is supported or not. The base station may transmit RVQoE configuration information to the UE in step 1e-10 (1e-10). The RVQoE measurement configuration may be transferred together with an OAM-based QoE measurement configuration. The RVQoE measurement configuration may be included in the RRCReconfiguration or RRCResume message. For example, the base station may indicate the setup or release of RVQoE measurement to the UE through the setup or release of parameter ran-VisibleParameters in the AppLayerMeasConfig IE. Parameter ran-VisibleParameters may include a RAN-VisibleParameters IE. Through the corresponding step, the base station may provide the UE with at least one of the following parameters:
- RVQoE measurement reporting periodicity (for example, ran-VisiblePeriodicity): the UE AS or UE APP may transmit the RVQoE measurement report to the base station at each RVQoE periodicity.
- The maximum number of reportable buffer levels (for example, numberOffiufferLevelEntries): multiple buffer levels may be included when the UE AS or UE APP reports RVQoE measurement, and the RVQoE measurement report may include buffer levels, the number of which is equal to or smaller than the value configured by numberOfBufferLevelEntries.
- Whether or not to report playout delay when media starts (for example, reportPlayoutDelayForMediaStartup): in case that the indicated value of reportPlayoutDelayForMediaStartup is "true," the UE AS or UE APP may transmit a RVQoE report including playout delay, when media starts. In case that the indicated value of reportPlayoutDelayForMediaStartup is "false," the UE AS or UE APP may not include playout delay in the RVQoE report, when media starts.

The UE AS may transfer or transmit RVQoE configuration information to the UE APP in step 1e-15 (1e-15). The RVQoE configuration information may include above-described configuration information (for example, at least one of ran-VisiblePeriodicity, numberOfBufferLevelEntries, or reportPlayoutDelayForMediaStartup). The UE AS may transfer or transmit RVQoE configuration information to the UE APP by using an AT command. The RVQoE configuration information may be transferred to the APP layer together with OAM-based QoE measurement configurations. The UE APP may perform QoE measurement, based on RVQoE measurement configuration information, may generate an RVQoE measurement report, and may transmit the same to the UE AS in step 1e-20 (1e-20). The UE APP may transmit the RVQoE measurement report to the UE AS by using an AT command. The RVQoE measurement report may be transferred to the AS layer together with an OAM-based QoE measurement report.

The UE AS may transfer, transmit, or report the RVQoE measurement report to the base station in step 1e-25 (1e-25). The UE AS may transfer, transmit, or report the RVQoE measurement report through an RRC message. The RVQoE measurement report may be transferred, transmitted, or reported to the base station together with an OAM-based QoE measurement report. In 1e-25, the RVQoE measurement report may be transmitted through an RAN-VisibleMeasurements IE inside the MeasurementReportAppLayer message, and the RAN-VisibleMeasurements IE may include at least one of the following parameters:
- the APP layer's buffer level list (for example, appLayerBufferLevelList): the UE may include multiple buffer levels measured by the UE APP, and may report the multiple buffer levels to the base station through appLayerBufferLevelList. Among parameters included in RVQoE configuration information, numberOfBufferLevelEntries may limit how many will be included.
- Playout delay (for example, playoutDelayForMediaStartup): the UE may include playout delay when media starts, and may report the playout delay to the base station through playoutDelayForMediaStartup. The playout delay value may be indicated at the ms level. In case that parameter reportPlayoutDelayForMediaStartup included in RVQoE configuration information is configured to be "true," the UE may include playoutDelayForMediaStartup in the RVQoE measurement report.
- PDU session ID list (for example, pdu-SessionIdList): the UE may indicate the protocol data unit (PDU) used for the application data flow, which is the target of RVQoE measurement, to the base station through pdu-SessionIdList. The base station may recognize, through pdu-SessionIdList, regarding which PDU session(s) the RVQoE values (for example, buffer level and playout delay) have been measured, and may optimize scheduling and resource allocation regarding the PDU session(s) indicted by the pertinent parameter, according to the result of recognition.

The base station may read the RVQoE report and may perform network optimization by using the RVQoE report. For example, the base station may determine, based on the RVQoE report, that a specific UE is experiencing a disagreeable or poor QoE with regard to a specific service. The base station may allocate a larger amount of radio resources to the UE deemed to be experiencing a disagreeable or poor QoE, thereby improving the UE's QoE. The UE may (re)transmit the QoE measurement report, which has not been completely transmitted, to a new base station when performing a handover (for example, after completing a handover).

The UE may perform all or part of operations in the following order, for example.
1) The UE (for example, UE AS and/or UE APP) may receive QoE configuration information (for example, QoE configuration information or QoE measurement configuration) according to FIG. 1C or FIG. 1D.
2) The UE (for example, UE AS and/or UE APP) may perform QoE measurement according to FIG. 1C or FIG. 1D.
3) The UE AS may receive a QoE measurement report (for example, QoE measurement report or QoE report) from the UE APP. (for example, 1c-55 or 1d-35).
4) The UE AS may generate a QoE measurement reporting message (for example, MeasurementReportAppLayer message) in order to transmit the QoE measurement report received from the UE APP.
5) The UE (for example, UE AS and/or UE APP) may transfer the QoE measurement reporting message to the lower layer in order to transmit the same to the base station (for example, NG-RAN). The UE may determine whether or not to perform RRC segmentation in order to transfer the QoE measurement reporting message to the lower layer. The UE may perform RRC segmentation in case that all of the following conditions are satisfied.
   - Condition 1. In case that the generated QoE measurement reporting message has a larger size than the size of the maximum service data unit (SDU) supported by the lower layer (for example, PDCP layer)
   - Condition 2. In case that the UE supports RRC segmentation performing
   - Condition 3. In case that the base station allows RRC segmentation in the SRB (for example, SRB4 or SRB5) used for QoE measurement reporting (for example, in case that at least one indicator of rrc-SegAllowed, rrc-SegAllowedSRB4, or rrc-SegAllowedSRB5 is configured)

In case that all of the above conditions are satisfied, the UE may perform RRC segmentation with regard to the QoE reporting message, thereby splitting the QoE reporting message into multiple RRC segments. The multiple RRC segments may be transferred from the UE to the lower layer.

In case that at least one of the above conditions is not satisfied, the UE may transfer the QoE reporting message to the lower layer (for example, PDCP layer) without splitting the same.

6) The UE may receive an RRCReconfiguration message from the base station. The master cell group (MCG)-related configuration information (for example, masterCellGroup) in the RRCReconfiguration message may include a reconfiguration With Sync indicator. The reconfiguration With Sync indicator may be used by the base station to instruct the UE to perform a handover or MN change (for example, MCG change) to another base station (or cell).

7) The UE may apply configurations to a new base station included in the RRCReconfiguration message. The UE may transmit an RRCReconfigurationComplete message to the new base station (or cell). The RRCReconfigurationComplete message may indicate that the handover is successfully completed.

8) The UE may determine whether the QoE measurement reporting message or RRC segments have been successfully transmitted. For example, the UE may be confirmed by the lower layer whether the QoE measurement reporting message or RRC segments have been successfully transmitted.

In case of failing to receive a confirmation regarding successful transmission completion from the lower layer, the UE may determine that the QoE measurement reporting transmission to the previous base station (for example, source base station, pre-handover base station, or cell) is incomplete. Therefore, the UE may retransmit the QoE measurement reporting message or RRC segments to the new base station in order to prevent loss or omission of the QoE measurement report.

In case that the UE has transmitted at least one of the RRC segments (for example, segments 1) to the previous base station, has received a confirmation regarding the same from the lower layer, but has received no confirmation regarding the remaining RRC segments (for example, segments 2) other than the transmitted RRC segments from the lower layer, the UE may perform retransmission regarding all RRC segments (for example, segments 1 and segments 2) to the new base station. This is because the new base station may not have at least one (for example, segments 1) of the RRC segments transferred to the previous base station. In this case, the base station may be unable to assemble the existing QoE measurement report solely with some RRC segments (for example, segments 2). The UE thus needs to transmit all RRC segments (for example, segments 1 and segments 2) to the base station.

Detailed operations of the UE may be given in Table 9 below:

**[Table 9]**

| | | | | |
|---|---|---|---|---|
| 5.3.5.3 Reception of an *RRCReconfiguration* by the UE | | | | |
| The UE shall perform the following actions upon reception of the *RRCReconfiguration*, or upon execution of the conditional reconfiguration (CHO, CPA or CPC): | | | | |
| | | (Skip) | | |
| | 1> if *reconfigurationWithSync* was included in *spCellConfig* of an MCG or SCG and when MAC of an NR cell group successfully completes a Random Access procedure triggered above; or, | | | |
| | | (Skip) | | |
| | | 2> if *reconfigurationWithSync* was included in *masterCellGroup*: | | |
| | | | 3> if configured with application layer measurements and if application layer measurement report container has been received from upper layers for which the successful transmission of the message or at least one segment of the message has not been confirmed by lower layers: | |
| | | | | 4> re-submit the *MeasurementReportAppLayer* message or all segments of the *MeasurementReportAppLayer* message to lower layers for transmission via SRB4; |

FIG. 1F illustrates a procedure in which a UE retransmits a QoE measurement report when performing a handover according to an embodiment of the disclosure.

In the embodiment of FIG. 1F, the UE may be defined as a UE AS or UE APP, and the base station may be defined as an NG-RAN. The UE AS may be defined as the UE's AS layer, and the UE APP may be defined as a UE application layer. Operations performed by the UE may be interpreted as operations performed by the UE AS and/or UE APP.

Specific operations performed by the UE may follow the above-mentioned order. Detailed descriptions of operations performed in the following steps may follow descriptions according to the above-mentioned order. Detailed descriptions of operations performed in the following steps may thus be partially omitted.

In step 1f-05, the UE in a connected mode state may perform QoE measurement reporting (for example, QoE reporting). In step 1f-10, the UE's QoE measurement report may be transmitted to the base station through SRB4 configured by the base station.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1f-15. In order to transmit the QoE measurement reporting message to the base station, the UE AS may transfer the QoE measurement reporting message to the lower layer.

In step 1f-20, the UE may be instructed by the base station to perform a handover. The instruction to perform a handover may be delivered through the RRCReconfiguration as described above.

In step 1f-25, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. In order to retransmit the QoE measurement reporting message to the new base station through SRB4, the UE may transfer or transmit the QoE measurement reporting message to the lower layer.

The UE AS may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1f-30. The UE may transmit the RRC segments to the base station. In order to transmit the RRC segments to the base station, the UE AS may transfer the RRC segments to the lower layer.

In step 1f-35, the UE may be instructed by the base station to perform a handover. The instruction to perform a handover may be delivered through the RRCReconfiguration as described above.

In step 1f-40, in case of failing to receive a confirmation regarding successful transmission completion of at least one RRC segment to the previous base station (for example, source base station, pre-handover base station or cell) from the lower layer, the UE (or in case that a transmission of at least one RRC segment is incomplete), the UE may retransmit all RRC segments to the new base station (for example, target base station, post-handover base station or cell) through SRB4. In order to retransmit RRC segments to the new base station through SRB4, the UE may transfer or transmit all RRC segments to the lower layer.

According to an embodiment of the disclosure, the UE may have dual connectivity (DC) (for example, NR-DC) configured by the base station. A UE in the DC state may be simultaneously connected to two base stations (master node (MN) and secondary node (SN)). In case that SRB4 is configured, the UE in the DC state may transmit a QoE measurement report to the MN through SRB4. In case that SRB5 is configured, the UE in the DC state may transmit a QoE measurement report to the SN through SRB5.

The UE may be instructed to perform a handover or MN change in FIG. 1F. In case that the UE performs a handover as in FIG. 1F and fails to complete a successful transmission of the QoE measurement report which has been transmitted to the previous base station, the UE in NR may retransmit the QoE measurement report to the new base station.

The UE in NR may be instructed to perform not only an MN change (or MCG change), but also an SN change (or SCG change). Upon receiving the instruction, the UE may hand over to the indicated node (or cell).

For example, the UE may receive an RRCReconfiguration message from the base station. Secondary cell group (SCG)-related configuration information (for example, secondaryCellGroup) in the RRCReconfiguration message may include a reconfiguration With Sync indicator. The reconfigurationWithSync indicator may be used by the base station to instruct the UE to perform an SN change (or SCG change) to another base station (or cell).

When the UE in NR receives an SN change-related instructions and performs a handover, the QoE measurement reporting which has been conventionally transmitted to the SN through SRB5 may fail to be successfully transmitted completely. Hereinafter, the disclosure defines operations in which the UE retransmits the QoE measurement report to a new SN in order to prevent loss or omission of the QoE measurement report.

In case that loss or omission of the QoE measurement report occurs due to a failure to retransmit the QoE measurement report to the SN, at least one of the TCE, MCE, or OAM, which collects the QoE measurement report, may perform an erroneous network optimization operation. For example, in case that there is loss of the QoE measurement report including a measurement result indicating the UE's poor QoE, at least one of the TCE, MCE, or OAM may make an erroneous determination regarding the UE's QoE. In case of erroneously determining that there has been no poor QoE while a QoE measurement session proceeds, no operation for improving the UE's poor QE situation may be performed. If the situation repeats, the UE may continuously fail to have the poor QoE improved.

FIG. 1G illustrates a procedure in which a UE retransmits a QoE measurement report when performing a handover (MN change) or SN change according to an embodiment of the disclosure.

In the embodiment of FIG. 1G, the UE may be defined as a UE AS or UE APP, and the base station may be defined as an NG-RAN. The UE AS may be defined as the UE's AS layer, and the UE APP may be defined as a UE application layer. Operations performed by the UE may be interpreted as operations performed by the UE AS and/or UE APP.

Specific operations performed by the UE may follow the above-mentioned order. Detailed descriptions of operations performed in the following steps may follow descriptions according to the above-mentioned order. Detailed descriptions of operations performed in the following steps may thus be partially omitted.

In step 1g-05, the UE in a connected mode state may perform QoE measurement reporting (for example, QoE reporting).

In step 1g-10, the UE's QoE measurement report may be transmitted to the base station through SRB4 configured by the base station.

In the following steps, operations in which the UE transmits the QoE measurement report to the base station through SRB4 may follow the operations in FIG. 1F.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1g-15. In order to transmit the QoE measurement reporting message to the base station, the UE AS may transfer the QoE measurement reporting message to the lower layer.

In step 1g-20, the UE may be instructed by the base station to perform a handover. The instruction to perform a handover may be delivered through the RRCReconfiguration as described above.

In step 1g-25, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. In order to retransmit the QoE measurement reporting message to the new base station through SRB4, the UE may transfer or transmit the QoE measurement reporting message to the lower layer.

The UE AS may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1g-30. The UE may transmit the RRC segments to the base station. In order to transmit the RRC segments to the base station, the UE AS may transfer the RRC segments to the lower layer.

In step 1g-35, the UE may be instructed by the base station to perform a handover. The instruction to perform a handover may be delivered through the RRCReconfiguration as described above.

In step 1g-40, in case of failing to receive a confirmation regarding successful transmission completion of at least one RRC segment to the previous base station (for example, source base station, pre-handover base station or cell) from the lower layer, the UE (or in case that a transmission of at least one RRC segment is incomplete), the UE may retransmit all RRC segments to the new base station (for example, target base station, post-handover base station or cell) through SRB4. In order to retransmit RRC segments to the new base station through SRB4, the UE may transfer or transmit all RRC segments to the lower layer.

In step 1g-45, the UE's QoE measurement report may be transmitted to the base station through SRB5 configured by the base station.

The UE may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1g-50. In order to transmit the QoE measurement reporting message to the base station, the UE AS may transfer the QoE measurement reporting message to the lower layer.

In step 1g-55, the UE may be instructed by the base station to perform an SN change. The instruction to perform an SN change may be delivered through the RRCReconfiguration as described above.

In step 1g-60, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB5. In order to retransmit the QoE measurement reporting message to the new base station through SRB5, the UE may transfer or transmit the QoE measurement reporting message to the lower layer.

The UE AS may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1g-65. The UE may transmit the RRC segments to the base station. In order to transmit the RRC segments to the base station, the UE AS may transfer the RRC segments to the lower layer.

In step 1g-70, the UE may be instructed by the base station to perform an SN change. The instruction to perform an SN change may be delivered through the RRCReconfiguration as described above.

In step 1g-75, in case of failing to receive a confirmation regarding successful transmission completion of at least one RRC segment to the previous base station (for example, source base station, pre-handover base station or cell) from the lower layer, the UE (or in case that a transmission of at least one RRC segment is incomplete), the UE may retransmit all RRC segments to the new base station (for example, target base station, post-handover base station or cell) through SRB5. In order to retransmit RRC segments to the new base station through SRB5, the UE may transfer or transmit all RRC segments to the lower layer.

When the UE receives a QoE configuration, the base station may indicate the SRB (for example, reporting SRB or reporting leg (for example, reportingSRB)) (for example, through an RRCReconfiguration message or RRCResume message). The reportingSRB may indicate at least one of an SRB4 or an SRB5. The UE may have multiple QoE measurements configured therefor, and each QoE measurement may be distinguished by the RRC ID (for example, measConfigAppLayerId). With regard to each QoE measurement configuration, reportingSRB may be separately indicated. For example, in case that the reportingSRB regarding all QoE measurements configured for the UE is SRB4, the UE may perform QoE measurement reporting only with SRB4. Alternatively, in case that the reportingSRB regarding all QoE measurements configured for the UE is SRB5, the UE may perform QoE measurement reporting only with SRB5. Alternatively, in case that the reportingSRB regarding some QoE measurements configured for the UE is SRB4, and the reportingSRB regarding other QoE measurements configured for the UE is SRB5, the UE may separately perform SRB4-based QoE measurement reporting and SRB5-based QoE measurement reporting.

When the UE receives an RRCReconfiguration message indicating a handover or SN change from the UE, reportingSRB may be indicated thereto. When performing a handover, the UE may fail to receive a confirmation regarding successful transmission completion of the QoE report. The UE in NR may retransmit the QoE measurement report only with SRB4 (refer to Table 9).

When the UE performs a handover or SN change, the reporting SRB may be indicated thereto with SRB5. The UE may transmit a QoE measurement report with SRB4 upon having the reporting SRB indicated thereto with SRB5. However, the base station (MN) may fail to understand the QoE measurement report in this case, or may not have the corresponding QoE configuration. Therefore, the QoE measurement report may fail to be transferred to the TCE or MCE, and this may result in the problem of loss or omission of the QoE measurement report.

FIG. 1H illustrates a procedure in which a UE retransmits a QoE measurement report according to the configured SRB when performing a handover according to an embodiment of the disclosure.

In the embodiment of FIG. 1H, the UE may be defined as a UE AS or UE APP, and the base station may be defined as an NG-RAN. The UE AS may be defined as the UE's AS layer, and the UE APP may be defined as a UE application layer. Operations performed by the UE may be interpreted as operations performed by the UE AS and/or UE APP.

Specific operations performed by the UE may follow the above-mentioned order. Detailed descriptions of operations performed in the following steps may follow descriptions according to the above-mentioned order. Detailed descriptions of operations performed in the following steps may thus be partially omitted.

In step 1h-05, the UE in a connected mode state may perform QoE measurement reporting (for example, QoE reporting).

In step 1h-10, the UE's QoE measurement report may be transmitted to the base station through SRB4 configured by the base station.

In the following steps, operations in which the UE transmits the QoE measurement report to the base station through SRB4 may follow the operations in FIG. 1F or FIG. 1G. In addition, in the following steps, operations in which the UE transmits the QoE measurement report to the base station through SRB5 may follow the operations in FIG. 1G.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1h-15. In order to transmit the QoE measurement reporting message to the base station, the UE AS may transfer the QoE measurement reporting message to the lower layer.

In step 1h-20, the UE may be instructed by the base station to perform a handover. The instruction to perform a handover may be delivered through the RRCReconfiguration message as described above. The UE may have a reporting leg regarding all or part of the QoE configuration ID configured as SRB4 by the base station through the QoE configuration in the RRCReconfiguration message for instructing a handover.

In step 1h-25, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. A retransmission of the QoE measurement reporting message may be conducted with regard to only the QoE configuration ID regarding which the reporting leg is configured as SRB4. In order to retransmit the QoE measurement reporting message to the new base station, the UE may transfer or transmit the QoE measurement reporting message to the lower layer.

In step 1h-30, the UE may be instructed by the base station to perform a handover. The instruction to perform a handover may be delivered through the RRCReconfiguration as described above. The UE may have a reporting leg regarding all or part of the QoE configuration ID configured as SRB5 by the base station through the QoE configuration in the RRCReconfiguration message for instructing a handover.

In step 1g-35, in case of failing to receive a confirmation regarding successful transmission completion of the QoE measurement reporting message to the previous base station (for example, source base station, pre-handover base station or cell) from the lower layer, the UE (or in case that a transmission of at least one RRC segment is incomplete), the UE may retransmit the QoE measurement reporting message to the new base station (for example, target base station, post-handover base station or cell) through SRB5. A retransmission of the QoE measurement reporting message may be conducted with regard to only the QoE configuration ID regarding which the reporting leg is configured as SRB5. In order to retransmit the QoE measurement reporting message to the new base station, the UE may transfer or transmit the QoE measurement reporting message to the lower layer.

The UE may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1h-40. The UE may transmit the RRC segments to the base station. In order to transmit the RRC segments to the base station, the UE AS may transfer the RRC segments to the lower layer.

In step 1h-45, the UE may be instructed by the base station to perform a handover. The instruction to perform a handover may be delivered through the RRCReconfiguration message as described above. The UE may have a reporting leg regarding all or part of the QoE configuration ID configured as SRB4 by the base station through the QoE configuration in the RRCReconfiguration message for instructing a handover.

In step 1h-50, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB4. A retransmission of the RRC segments may be conducted with regard to only the QoE configuration ID regarding which the reporting leg is configured as SRB4. In order to retransmit the RRC segments to the new base station, the UE may transfer or transmit all RRC segments to the lower layer.

In step 1h-55, the UE may be instructed by the base station to perform a handover. The instruction to perform a handover may be delivered through the RRCReconfiguration as described above. The UE may have a reporting leg regarding all or part of the QoE configuration ID configured as SRB5 by the base station through the QoE configuration in the RRCReconfiguration message for instructing a handover.

In step 1h-60, in case of failing to receive a confirmation regarding successful transmission completion of at least one RRC segment to the previous base station (for example, source base station, pre-handover base station or cell) from the lower layer, the UE (or in case that a transmission of at least one RRC segment is incomplete), the UE may retransmit all RRC segments to the new base station (for example, target base station, post-handover base station or cell) through SRB5. A retransmission of the RRC segments may be conducted with regard to only the QoE configuration ID regarding which the reporting leg is configured as SRB5. In order to retransmit the RRC segments to the new base station, the UE may transfer or transmit all RRC segments to the lower layer.

In order to transmit the QoE measurement reporting message to the base station, the UE may transfer the same to the lower layer. In order to transmit the QoE measurement reporting message to lower layer, the UE may determine whether or not to perform RRC segmentation. The UE may perform RRC segmentation in case that all of the above-described conditions are satisfied. As one of the above-described conditions, in case that the SRB used by the base station for QoE measurement reporting allows or supports RRC segmentation to be performed (for example, in case that at least one indicator from among rrc-SegAllowed, rrc-SegAllowedSRB4, or rrc-SegAllowedSRB5 is configured), the UE may perform RRC segmentation.

When performing a handover, the UE in NR may retransmit QoE measurement reporting segments to the new base station regardless of whether the new base station allows RRC segmentation or not (refer to Table 9). However, in case that the new base station does not allow or support RRC segmentation, and in case that the UE transmits RRC segments, the base station cannot understand or assemble the RRC segments. In case that the base station cannot understand or assemble the RRC segments, the base station may ignore or discard the received QoE measurement report, and this may lead to loss or omission of the QoE measurement report. As a result, wrong network optimization may occur in at least one of the TCE, MCE, or OAM which collects the QoE measurement report. In addition, radio resources and the UE's energy may be used to transmit the RRC segments, thereby wasting the resources and the UE's energy.

FIG. 1I illustrates a procedure in which a UE retransmits a QoE measurement report according to whether a new base station allows RRC segmentation or not when performing a handover according to an embodiment of the disclosure.

In the embodiment of FIG. 1I, the UE may be defined as a UE AS or UE APP, and the base station may be defined as an NG-RAN. The UE AS may be defined as the UE's AS layer, and the UE APP may be defined as a UE application layer. Operations performed by the UE may be interpreted as operations performed by the UE AS and/or UE APP.

Specific operations performed by the UE may follow the above-mentioned order. Detailed descriptions of operations performed in the following steps may follow descriptions according to the above-mentioned order. Detailed descriptions of operations performed in the following steps may thus be partially omitted.

In step 1i-05, the UE in a connected mode state may perform QoE measurement reporting (for example, QoE reporting).

In step 1i-10, the UE's QoE measurement report may be transmitted to the base station through SRB4 configured by the base station.

In the following steps, operations in which the UE transmits the QoE measurement report to the base station through SRB4 may follow the operations in FIG. 1F, FIG. 1G, or FIG. 1H.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1i-15. In order to transmit the QoE measurement reporting message to the base station, the UE AS may transfer the QoE measurement reporting message to the lower layer.

In step 1i-20, the UE may be instructed by the base station to perform a handover. The instruction to perform a handover may be delivered through the RRCReconfiguration message as described above.

In step 1i-25, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. In order to retransmit the QoE measurement reporting message to the new base station, the UE may transfer or transmit the QoE measurement reporting message to the lower layer.

The UE may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1i-30. The UE may transmit the RRC segments to the base station. In order to transmit the RRC segments to the base station, the UE AS may transfer the RRC segments to the lower layer.

In step 1i-35, the UE may be instructed by the base station to perform a handover. The instruction to perform a handover may be delivered through the RRCReconfiguration message as described above. The RRCReconfiguration message for the handover instruction may include a QoE configuration. The base station may indicate, through the RRCReconfiguration message, that the new base station allows RRC segmentation of the QoE measurement reporting using SRB4.

In step 1i-40, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB4. In order to retransmit the RRC segments to the new base station, the UE may transfer or transmit all RRC segments to the lower layer.

In step 1i-45, the UE may be instructed by the base station to perform a handover. The instruction to perform a handover may be delivered through the RRCReconfiguration message as described above. The RRCReconfiguration message for the handover instruction may include a QoE configuration. The base station may indicate, through the RRCReconfiguration message, that the new base station does not allow RRC segmentation of the QoE measurement reporting using SRB4.

In step 1i-50, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may discard all RRC segments without retransmitting the same. The RRC segments may be discarded because the new base station does not allow RRC segmentation.

FIG. 1JA and FIG. 1JB illustrate a procedure in which a UE retransmits a QoE measurement report according to the configured SRB and according to whether a new base station allows RRC segmentation or not, when performing a handover (MN change) or SN change according to an embodiment of the disclosure.

In the embodiment of FIG. 1JA and FIG. 1JB, the UE may be defined as a UE AS or UE APP, and the base station may be defined as an NG-RAN. The UE AS may be defined as the UE's AS layer, and the UE APP may be defined as a UE application layer. Operations performed by the UE may be interpreted as operations performed by the UE AS and/or UE APP.

Specific operations performed by the UE may follow the above-mentioned order. Detailed descriptions of operations performed in the following steps may follow descriptions according to the above-mentioned order. Detailed descriptions of operations performed in the following steps may thus be partially omitted.

In step 1j-05, the UE in a connected mode state may perform QoE measurement reporting (for example, QoE reporting).

In step 1j-10, the UE's QoE measurement report may be transmitted to the base station through SRB4 configured by the base station.

In the following steps, operations in which the UE transmits the QoE measurement report to the base station through SRB4 may follow the operations in FIG. 1F, FIG. 1G, FIG. 1H, or FIG. 1I.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1j-15. In order to transmit the QoE measurement reporting message to the base station, the UE AS may transfer the QoE measurement reporting message to the lower layer.

In step 1j-20, the UE may be instructed by the base station to perform a handover. The instruction to perform a handover may be delivered through the RRCReconfiguration message as described above. The UE may have a reporting leg regarding all or part of the QoE configuration ID configured as SRB4 by the base station through the QoE configuration in the RRCReconfiguration message for instructing a handover.

In step 1j-25, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. A retransmission of the QoE measurement reporting message may be conducted with regard to only the QoE configuration ID regarding which the reporting leg is configured as SRB4. In order to retransmit the QoE measurement reporting message to the new base station, the UE may transfer or transmit the QoE measurement reporting message to the lower layer.

In step 1j-30, the UE may be instructed by the base station to perform a handover. The instruction to perform a handover may be delivered through the RRCReconfiguration message as described above. The UE may have a reporting leg regarding all or part of the QoE configuration ID configured as SRB5 by the base station through the QoE configuration in the RRCReconfiguration message for instructing a handover.

In step 1j-35, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB5. A retransmission of the QoE measurement reporting message may be conducted with regard to only the QoE configuration ID regarding which the reporting leg is configured as SRB5. In order to retransmit the QoE measurement reporting message to the new base station, the UE may transfer or transmit the QoE measurement reporting message to the lower layer.

The UE AS may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1j-40. The UE may transmit the RRC segments to the base station. In order to transmit the RRC segments to the base station, the UE AS may transfer the RRC segments to the lower layer.

In step 1j-45, the UE may be instructed by the base station to perform a handover. The instruction to perform a handover may be delivered through the RRCReconfiguration message as described above. The UE may have a reporting leg regarding all or part of the QoE configuration ID configured as SRB4 by the base station through the QoE configuration in the RRCReconfiguration message for instructing a handover. In addition, the RRCReconfiguration message for instructing a handover may include a QoE configuration. The QoE configuration may indicate that the new base station allows RRC segmentation of the QoE measurement reporting using SRB4.

In step 1j-50, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB4. A retransmission of the RRC segments may be conducted with regard to only the QoE configuration ID regarding which the reporting leg is configured as SRB4. In order to retransmit the RRC segments to the new base station, the UE may transfer or transmit all RRC segments to the lower layer.

In step 1j-55, the UE may be instructed by the base station to perform a handover. The instruction to perform a handover may be delivered through the RRCReconfiguration message as described above. The UE may have a reporting leg regarding all or part of the QoE configuration ID configured as SRB5 by the base station through the QoE configuration in the RRCReconfiguration message for instructing a handover. In addition, the RRCReconfiguration message for instructing a handover may include a QoE configuration. The QoE configuration may indicate that the new base station allows RRC segmentation of the QoE measurement reporting using SRB5.

In step 1j-60, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB5. A retransmission of the RRC segments may be conducted with regard to only the QoE configuration ID regarding which the reporting leg is configured as SRB5. In order to retransmit the RRC segments to the new base station, the UE may transfer or transmit all RRC segments to the lower layer.

In step 1j-65, the UE may be instructed by the base station to perform a handover. The instruction to perform a handover may be delivered through the RRCReconfiguration message as described above. The UE may have a reporting leg regarding all or part of the QoE configuration ID configured as SRB4 by the base station through the QoE configuration in the RRCReconfiguration message for instructing a handover. In addition, the RRCReconfiguration message for instructing a handover may include a QoE configuration. The QoE configuration may indicate that the new base station does not allow RRC segmentation of the QoE measurement reporting using SRB4.

In step 1i-70, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may discard all RRC segments without retransmitting the same. The RRC segments may be discarded because the new base station does not allow or support RRC segmentation.

In step 1j-75, the UE may be instructed by the base station to perform a handover. The instruction to perform a handover may be delivered through the RRCReconfiguration message as described above. The UE may have a reporting leg regarding all or part of the QoE configuration ID configured as SRB5 by the base station through the QoE configuration in the RRCReconfiguration message for instructing a handover. In addition, the RRCReconfiguration message for instructing a handover may include a QoE configuration. The QoE configuration may indicate that the new base station does not allow RRC segmentation of the QoE measurement reporting using SRB5.

In step 1i-80, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may discard all RRC segments without retransmitting the same. The RRC segments may be discarded because the new base station does not allow or support RRC segmentation.

In step 1j-85, the UE's QoE measurement report may be transmitted to the base station through SRB5 configured by the base station.

In the following steps, operations in which the UE transmits the QoE measurement report to the base station through SRB5 may follow the operations in FIG. 1G or FIG. 1H.

The UE AS may generate (encode) a QoE measurement reporting message by using QoE measurement reporting information received from the upper layer. The UE may transmit the QoE measurement reporting message to the base station.

In case that at least one of the above-described conditions for performing RRC segmentation is not satisfied, RRC segmentation may not be performed. The UE AS may transmit a QoE measurement reporting message to the base station (without performing RRC segmentation) in step 1j-90. In order to transmit the QoE measurement reporting message to the base station, the UE AS may transfer the QoE measurement reporting message to the lower layer.

In step 1j-95, the UE may be instructed by the base station to perform an SN change. The instruction to perform an SN change may be delivered through the RRCReconfiguration message as described above. The UE may have a reporting leg regarding all or part of the QoE configuration ID configured as SRB5 by the base station through the QoE configuration in the RRCReconfiguration message for instructing an SN change.

In step 1j-100, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB5. A retransmission of the QoE measurement reporting message may be conducted with regard to only the QoE configuration ID regarding which the reporting leg is configured as SRB5. In order to retransmit the QoE measurement reporting message to the new base station, the UE may transfer or transmit the QoE measurement reporting message to the lower layer.

In step 1j-105, the UE may be instructed by the base station to perform an SN change. The instruction to perform an SN change may be delivered through the RRCReconfiguration message as described above. The UE may have a reporting leg regarding all or part of the QoE configuration ID configured as SRB4 by the base station through the QoE configuration in the RRCReconfiguration message for instructing an SN change.

In step 1j-110, in case that the UE has received no confirmation regarding successful transmission completion of the QoE measurement reporting message to the previous base station (for example, source base station, pre-handover base station or cell) from the lower layer (or in case that a transmission of the QoE measurement reporting message is incomplete), the UE may retransmit the QoE measurement reporting message to the new base station (for example, target base station, post-handover base station or cell) through SRB4. A retransmission of the QoE measurement reporting message may be conducted with regard to only the QoE configuration ID regarding which the reporting leg is configured as SRB4. In order to retransmit the QoE measurement reporting message to the new base station, the UE may transfer or transmit the QoE measurement reporting message to the lower layer.

The UE AS may generate (encode) a QoE measurement reporting message by using QoE measurement reporting information received from the upper layer. The UE may transmit the QoE measurement reporting message to the base station.

In case that all of the above-described conditions for performing RRC segmentation are satisfied, the UE may generate RRC segments by performing RRC segmentation with regard to the QoE measurement reporting message in step 1j-40. The UE may transmit the RRC segments to the base station. In order to transmit the RRC segments to the base station, the UE AS may transfer the RRC segments to the lower layer.

In step 1j-120, the UE may be instructed by the base station to perform an SN change. The instruction to perform an SN change may be delivered through the RRCReconfiguration message as described above. The UE may have a reporting leg regarding all or part of the QoE configuration ID configured as SRB5 by the base station through the QoE configuration in the RRCReconfiguration message for instructing an SN change. In addition, the RRCReconfiguration message for instructing an SN change may include a QoE configuration. The QoE configuration may indicate that the new base station allows RRC segmentation of the QoE measurement reporting using SRB5.

In step 1j-125, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB5. A retransmission of the RRC segments may be conducted with regard to only the QoE configuration ID regarding which the reporting leg is configured as SRB5. In order to retransmit the RRC segments to the new base station, the UE may transfer or transmit all RRC segments to the lower layer.

In step 1j-130, the UE may be instructed by the base station to perform an SN change. The instruction to perform an SN change may be delivered through the RRCReconfiguration message as described above. The UE may have a reporting leg regarding all or part of the QoE configuration ID configured as SRB4 by the base station through the QoE configuration in the RRCReconfiguration message for instructing an SN change. In addition, the RRCReconfiguration message for instructing an SN change may include a QoE configuration. The QoE configuration may indicate that the new base station allows RRC segmentation of the QoE measurement reporting using SRB4.

In step 1j-135, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may retransmit all RRC segments to the new base station (for example, target base station, post-handover base station or cell) through SRB4. A retransmission of the RRC segments may be conducted with regard to only the QoE configuration ID regarding which the reporting leg is configured as SRB4. In order to retransmit the RRC segments to the new base station, the UE may transfer or transmit all RRC segments to the lower layer.

In step 1j-140, the UE may be instructed by the base station to perform an SN change. The instruction to perform an SN change may be delivered through the RRCReconfiguration message as described above. The UE may have a reporting leg regarding all or part of the QoE configuration ID configured as SRB5 by the base station through the QoE configuration in the RRCReconfiguration message for instructing an SN change. In addition, the RRCReconfiguration message for instructing an SN change may include a QoE configuration. The QoE configuration may indicate that the new base station does not allow RRC segmentation of the QoE measurement reporting using SRB5.

In step 1j-145, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may discard all RRC segments without retransmitting the same. The RRC segments may be discarded because the new base station does not allow or support RRC segmentation.

In step 1j-150, the UE may be instructed by the base station to perform an SN change. The instruction to perform an SN change may be delivered through the RRCReconfiguration message as described above. The UE may have a reporting leg regarding all or part of the QoE configuration ID configured as SRB4 by the base station through the QoE configuration in the RRCReconfiguration message for instructing an SN change. In addition, the RRCReconfiguration message for instructing an SN change may include a QoE configuration. The QoE configuration may indicate that the new base station does not allow RRC segmentation of the QoE measurement reporting using SRB4.

In step 1j-155, in case that the UE has received no confirmation regarding successful transmission completion of at least one RRC segment to the previous base station (for example, source base station, pre-handover base station or cell) from the lower layer (or in case that a transmission of at least one RRC segment is incomplete), the UE may discard all RRC segments without retransmitting the same. The RRC segments may be discarded because the new base station does not allow or support RRC segmentation.

The QoE measurement reporting message or RRC segments retransmitted by the UE may include a QoE measurement report regarding multiple QoE measurement configuration IDs (for example, measConfigAppLayerId). In case that the UE is instructed to perform a handover or SN change, different values may be configured for the UE in connection with the reporting SRB (for example, SRB4) regarding some of the QoE measurement configuration IDs and the reporting SRB (for example, SRB5) regarding the remaining IDs.

According to Table 9, the UE in NR may transmit the QoE measurement reporting message or RRC segments, which have previously been supposed to be transmitted, through SRB4. In case that the QoE measurement report regarding the QoE configuration ID for which SRB5-based transmission is configured is transmitted to the MNs, the MN may discard the received QoE measurement report because the MN does not understand the same or does not have relevant configurations. This may lead to the problem of loss or omission of the QoE measurement report.

The UE may be instructed by the base station to perform a handover or SN change. The instruction to perform a handover or SN change may be delivered through an RRCReconfiguration message. Through the QoE configuration in the RRCReconfiguration message, the base station may indicate the same reporting SRB with regard to all QoE configuration IDs. The UE may retransmit the QoE measurement reporting message or RRC segments, a successful transmission of which to the base station has previously failed, to the new base station. The UE may transmit the QoE measurement reporting message or RRC segments without modification.

However, the base station may indicate a reporting SRB, the QoE configuration of which in the RRCReconfiguration message is different with regard to at least one QoE configuration ID. The UE may discard the QoE measurement reporting message or RRC segments when retransmitting the QoE measurement reporting message or RRC segments, a successful transmission of which to the base station has previously failed, to the new base station.

The UE may generate or encode a message including only a QoE measurement report regarding the QoE configuration ID for which SRB4 is indicated and a message including only a QoE measurement report regarding the QoE configuration ID for which SRB5 is indicated. The message including only a QoE measurement report regarding the QoE configuration ID for which SRB4 is indicated may be transmitted with SRB4. The message including only a QoE measurement report regarding the QoE configuration ID for which SRB5 is indicated may be transmitted with SRB5. In case that a QoE report message satisfies all of the predetermined conditions described above, the QoE report message may be transmitted after RRC segmentation is performed.

In an embodiment of the disclosure, the UE may perform operations according to Table 10 below:

**[Table 10]**

| | | | | | | |
|---|---|---|---|---|---|---|
| 5.3.5.3 Reception of an *RRCReconfiguration* by the UE | | | | | | |
| The UE shall perform the following actions upon reception of the *RRCReconfiguration,* or upon execution of the conditional reconfiguration (CHO, CPA or CPC): | | | | | | |
| | | (Skip) | | | | |
| | 1> if *reconfigurationWithSync* was included in *spCellConfig* of an MCG or SCG and when MAC of an NR cell group successfully completes a Random Access procedure triggered above; or, | | | | | |
| | | (Skip) | | | | |
| | | 2> if *reconfigurationWithSync* was included in *masterCellGroup or secondaryCellGroup*: | | | | |
| | | | 3> if configured with application layer measurements and if application layer measurement report container has been received from upper layers for which the successful transmission of the message or at least one segment of the message via SRB4 (if *reconfigurationWithSync* was included in *masterCellGroup*) or SRB5 (if *reconfigurationiWithSync* was included in *secondaryCellGroup*) has not been confirmed by lower layers: | | | |
| | | | | 4> if RRC segmentation was used for the *MeasurementReportAppLayer* message: | | |
| | | | | | 5> if the RRC message segmentation is enabled based on the field *rrc-SegAllowedSRB4* or *rrc-SegAllowedSRB5* on the reporting SRB: | |
| | | | | | | 6> re-submit all the segments of the *MeasurementReportAppLayer* message to lower layers for transmission via the reporting SRB; |

| | | | | | | |
|---|---|---|---|---|---|---|
| | | | | | 5> else: | |
| | | | | | | 6> discard all segments of the *MeasurementReportAppLayer* message; |
| | | | | 4> else: | | |
| | | | | | 5> re-submit the *MeasurementReportAppLayer* message to lower layers for transmission via the reporting SRB; | |
| | | | NOTE: Unless the same reporting SRB for all *measConfigAppLayerId* within the *MeasurementReportAppLayer* message is configured, UE discards the *MeasurementReportAppLayer* message and encodes/submits two separate *MeasurementReportAppLayer* messages to lower layers for transmission via SRB4 and SRB5, respectively. | | | |

In an embodiment of the disclosure, the UE may perform operations according to Table 11 below:

**[Table 11]**

| | | |
|---|---|---|
| | | 5.3.5.3 Reception of an *RRCReconfiguration* by the UE |
| | | The UE shall perform the following actions upon reception of the *RRCReconfiguration,* or upon execution of the conditional reconfiguration (CHO, CPA or CPC): |
| | | (Skip) |
| | 1> if *reconfigurationWithSync* was included in *spCellConfig* of an MCG or SCG and when MAC of an NR cell group successfully completes a Random Access procedure triggered above; or, | |
| | | (Skip) |
| | | 2> if *reconfigurationWithSync* was included in *masterCellGroup or secondaryCellGroup*: |
| | | 3> if configured with application layer measurements and if application layer measurement report container has been received from upper layers for which the successful transmission of the message or at least one segment of the message via SRB4 (if *reconfigurationWithSync* was included in *masterCellGroup*) or SRB5 (if *reconfigurationWithSync* was included in *secondaryCellGroup*) has not been confirmed by lower layers: |
| | | 4> if the same reporting SRB for all *measConfigAppLayerId* within the *MeasurementReportAppLayer* message is configured: |

| | | |
|---|---|---|
| | | 5> if RRC segmentation was used for the *MeasurementReportAppLayer* message: |
| | | 6> if the RRC message segmentation is enabled based on the field *rrc-SegAllowedSRB4* or *rrc-SegAllowedSRB5* on the reporting SRB: |
| | | 7> re-submit all the segments of the *MeasurementReportAppLayer* message to lower layers for transmission via the reporting SRB; |
| | | 6> else: |
| | | 7> discard all segments of the *MeasurementReportAppLayer* message; |
| | | 5> else: |
| | | 6> re-submit the *MeasurementReportAppLayer* message to lower layers for transmission via the reporting SRB; |
| | | 4> else: |

| |
|---|
| 5> encode two separate *MeasurementReportAppLayer* messages to be sent via SRB4 and SRB5, respectively, and discard the previous *MeasurementReportAppLayer* message or all segments of the previous *MeasurementReportAppLayer* message; |
| 5> for each encoded *MeasurementReportAppLayer* message generated above: |
| 6> if the encoded RRC message is larger than the maximum supported size of one PDCP SDU specified in TS 38.323 [5]: |
| 7> if the RRC message segmentation is enabled based on the field *rrc-SegAllowedSRB4* received in *appLayerMeasConfig* and the reporting SRB is SRB4; or |
| 7> if the RRC message segmentation is enabled based on the field *rrc-SegAllowedSRB5* received in *appLayerMeasConfig* and the reporting SRB is SRB5: |
| 8> initiate the UL message segment transfer procedure as specified in clause 5.7.7 via the SRB indicated in the field *reportingSRB* in *MeasConfigAppLayer*; |
| 7> else: |
| 8> discard the RRC message; |
| 6> else: |
| 7> submit the *MeasurementReportAppLayer* message to lower layers for transmission via the reporting SRB; |

FIG. 1K illustrates an internal structure of a UE according to an embodiment of the disclosure.

Referring to FIG. 1K, the UE may include a radio frequency (RF) processor 1k-10, a baseband processor 1k-20, a storage 1k-30, and/or a controller 1k-40.

The RF processor 1k-10 may perform functions for transmitting/receiving signals through a radio channel, such as signal band conversion and amplification. That is, the RF processor 1k-10 may up-convert a baseband signal provided from the baseband processor 1k-20 to an RF band signal, may transmit the same through an antenna, and may down-convert an RF band signal received through the antenna to a baseband signal. For example, the RF processor 1k-10 may include a transmission filter, a reception filter, an amplifier, a mixer, an oscillator, a digital-to-analog converter (DAC), an analog-to-digital converter (ADC), and the like. Although only one antenna is illustrated in the drawing, the UE may include multiple antennas. In addition, the RF processor 1k-10 may include multiple RF chains. Furthermore, the RF processor 1k-10 may perform beamforming. For the beamforming, the RF processor 1k-10 may adjust the phase and magnitude of signals transmitted/received through multiple antennas or antenna elements, respectively. In addition, the RF processor may perform MIMO, and may receive multiple layers when performing a MIMO operation.

The baseband processor 1k-20 may perform functions of conversion between baseband signals and bitstrings according to the physical layer specifications of the system. For example, during data transmission, the baseband processor 1k-20 may encode and modulate a transmitted bitstring to generate complex symbols. In addition, during data reception, the baseband processor 1k-20 may demodulate and decode a baseband signal provided from the RF processor 1k-10 to restore a received bitstring. For example, when following the orthogonal frequency division multiplexing (OFDM) scheme, during data transmission, the baseband processor 1k-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 1k-20 may split a baseband signal provided from the RF processor 1k-10 at the OFDM symbol level, may restore signals mapped to subcarriers through a fast Fourier transform (FFT) operation, and may restore a received bitstring through demodulation and decoding.

The baseband processor 1k-20 and the RF processor 1k-10 may transmit and receive signals as described above. Therefore, the baseband processor 1k-20 and the RF processor 1k-10 may be referred to as a transmitter, a receiver, a transceiver, or a communication unit. Furthermore, at least one of the baseband processor 1k-20 and the RF processor 1k-10 may include multiple communication modules to support multiple different radio access technologies. In addition, at least one of the baseband processor 1k-20 and the RF processor 1k-10 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 1k-30 may store basic programs, application programs, and data, such as configuration information, for operation of the main base station. Particularly, the storage 1k-30 may store information associated with a second access node configured to perform wireless communication by using a second radio access technology. In addition, the storage 1k-30 may provide the stored data at the request of the controller 1k-40.

The controller 1k-40 controls the overall operation of the UE. For example, the controller 1k-40 may transmit/receive signals through the baseband processor 1k-20 and the RF processor 1k-10. In addition, the controller1k-40 records data in the storage 1k-30 and reads the data from the storage 1k-30. To this end, the controller 1k-40 may include at least one processor. For example, the controller 1k-40 may include a communication processor (CP) that performs control for communication and an application processor (AP) that controls upper layers such as application programs, and may include a multi-connection processor 1k-42 as illustrated in the drawing. The controller 1k-40 may control the operations of the UE according to various embodiments of the disclosure. In addition, the controller 1k-40 may control the operations of the UE AS or UE APP according to various embodiments of the disclosure.

FIG. 1L illustrates a structure of a base station according to an embodiment of the disclosure.

Referring to FIG. 1L, the base station may include an RF processor 1l-10, a baseband processor 1l-20, a backhaul communicator 1l-30, a storage 1l-40, and a controller 1l-50.

The RF processor 1l-10 may perform functions for transmitting/receiving signals through a radio channel, such as signal band conversion and amplification. That is, the RF processor 1l-10 may up-convert a baseband signal provided from the baseband processor 1l-20 to an RF band signal, may transmit the same through an antenna, and may down-convert an RF band signal received through the antenna to a baseband signal. For example, the RF processor 1l-10 may include a transmission filter, a reception filter, an amplifier, a mixer, an oscillator, a DAC, and an ADC. Although only one antenna is illustrated in the drawing, the UE may include multiple antennas. In addition, the RF processor 1l-10 may include multiple RF chains. Furthermore, the RF processor 11-10 may perform beamforming. For the beamforming, the RF processor 1l-10 may adjust the phase and magnitude of signals transmitted/received through multiple antennas or antenna elements, respectively. The RF processor may transmit one or more layers to perform a downward MIMO operation.

The baseband processor 1l-20 may perform functions of conversion between baseband signals and bitstrings according to the physical layer specifications of a first radio access technology. For example, during data transmission, the baseband processor 1l-20 may encode and modulate a transmitted bitstring to generate complex symbols. In addition, during data reception, the baseband processor 1l-20 may demodulate and decode a baseband signal provided from the RF processor 1l-10 to restore a received bitstring. For example, when following the OFDM scheme, during data transmission, the baseband processor 1n-20 may encode and modulate a transmitted bitstring to generate complex symbols, may map the complex symbols to subcarriers, and may configure OFDM symbols through IFFT operation and CP insertion. In addition, during data reception, the baseband processor 1l-20 may split a baseband signal provided from the RF processor 1l-10 at the OFDM symbol level, may restore signals mapped to subcarriers through FFT operation, and may restore a received bitstring through demodulation and decoding. The baseband processor 1l-20 and the RF processor 1l-10 may transmit and receive signals as described above. Therefore, the baseband processor 1l-20 and the RF processor 1l-10 may be referred to as a transmitter, a receiver, a transceiver, or a communication unit.

The backhaul communication unit 1l-30 provides an interface for communicating with other nodes in the network. That is, the backhaul communication unit 1l-30 converts bitstrings transmitted from the main base station to other nodes, for example, an auxiliary base station, a core network, etc., into physical signals, and converts physical signals received from the other nodes into bitstrings.

The storage 1l-40 may store basic programs, application programs, and data, such as configuration information, for operation of the main base station. Particularly, the storage 1l-40 may store information associated with a bearer allocated to a connected UE, a measurement result reported from the connected UE, and the like. In addition, the storage 1l-40 may store information serving as a reference to determine whether to provide multi-connection to a UE or to suspend the same. In addition, the storage 1l-40 may provide the stored data at the request of the controller 1l-50.

The controller 11-50 controls overall operations of the main gNB. For example, the controller 11-50 transmits/receives signals through the baseband processor 11-20 and the RF processor 11-10 or through the backhaul communication unit 11-30. In addition, the controller1l-50 records data in the storage 1l-40 and reads the data from the storage 1l-40. To this end, the controller 1l-50 may include at least one processor, and may include a multi-connection processor 1l-52 as illustrated in the drawing. The controller 1l-50 may control the operations of the base station or the operations of the NG-RAN according to various embodiments of the disclosure.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

## Claims

1. A method performed by a terminal in a communication system, the method comprising:
receiving a radio resource control (RRC) message, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group;
identifying whether a successful transmission of the QoE measurement reporting message has been confirmed, based on reception of the RRC message, a transmission of the QoE measurement reporting message being based on a configured SRB;
in case that the successful transmission of the QoE measurement reporting message has not been confirmed, identifying whether RRC segmentation of the QoE measurement reporting message has been used; and
in case that RRC segmentation of the QoE measurement reporting message has been used, and in case that the RRC segmentation of the QoE measurement reporting message is allowed in the changed cell group, transmitting all segments of the QoE measurement reporting message, based on the SRB to report the result of QoE measurement.

2. The method of claim 1, further comprising discarding all segments of the QoE measurement reporting message in case that the RRC segmentation is not allowed in the changed cell group.

3. The method of claim 1, further comprising transmitting the QoE measurement reporting message, based on the SRB to report the result of QoE measurement, in case that RRC segmentation of the QoE measurement reporting message is not used.

4. The method of claim 1, wherein the cell group includes at least one of a master cell group (MCG) or a secondary cell group (SCG),
wherein the configured SRB indicates one of an SRB4 or an SRB5, and
wherein the SRB to report the result of QoE measurement indicates one of the SRB4 or the SRB5.

5. A method performed by a base station in a communication system, the method comprising:
transmitting a radio resource control (RRC) message to a terminal, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; and
receiving a message regarding completion of a cell group change from the terminal,
wherein, in case that a transmission of the QoE measurement reporting message is not successfully performed based on a configured SRB by the terminal, RRC segmentation of the QoE measurement reporting message is used, and the RRC segmentation of the QoE measurement reporting message is allowed in the changed cell group, all segments of the QoE measurement reporting message are transmitted to the changed cell group, based on the SRB to report the result of QoE measurement.

6. The method of claim 5, wherein all segments of the QoE measurement reporting message are discarded in case that the RRC segmentation is not allowed in the changed cell group.

7. The method of claim 5, wherein the QoE measurement reporting message is transmitted based on the SRB to report the result of QoE measurement in case that RRC segmentation of the QoE measurement reporting message is not used.

8. The method of claim 5, wherein the cell group includes at least one of a master cell group (MCG) or a secondary cell group (SCG),
wherein the configured SRB indicates one of an SRB4 or an SRB5, and
wherein the SRB to report the result of QoE measurement indicates one of the SRB4 or the SRB5.

9. A terminal in a communication system, the terminal comprising:
a transceiver; and
a controller connected to the transceiver,
wherein the controller is configured to:
receive a radio resource control (RRC) message, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group;
identify whether a successful transmission of the QoE measurement reporting message has been confirmed, based on reception of the RRC message, a transmission of the QoE measurement reporting message being based on a configured SRB;
in case that the successful transmission of the QoE measurement reporting message has not been confirmed, identify whether RRC segmentation of the QoE measurement reporting message has been used; and
in case that RRC segmentation of the QoE measurement reporting message has been used, and in case that the RRC segmentation of the QoE measurement reporting message is allowed in the changed cell group, transmit all segments of the QoE measurement reporting message, based on the SRB to report the result of QoE measurement.

10. The terminal of claim 9, wherein the controller is configured to discard all segments of the QoE measurement reporting message in case that the RRC segmentation is not allowed in the changed cell group.

11. The terminal of claim 9, wherein the controller is configured to transmit the QoE measurement reporting message, based on the SRB to report the result of QoE measurement, in case that RRC segmentation of the QoE measurement reporting message is not used.

12. The terminal of claim 9, wherein the cell group includes at least one of a master cell group (MCG) or a secondary cell group (SCG),
wherein the configured SRB indicates one of an SRB4 or an SRB5, and
wherein the SRB to report the result of QoE measurement indicates one of the SRB4 or the SRB5.

13. A base station in a communication system, the base station comprising:
a transceiver; and
a controller connected to the transceiver,
wherein the controller is configured to:
transmit a radio resource control (RRC) message to a terminal, the RRC message including at least one from among at least one QoE measurement configuration including information associated with a signaling radio bearer (SRB) to report a result of quality of experience (QoE) measurement, and information indicating whether RRC segmentation of a QoE measurement reporting message including the result of QoE measurement is allowed in a changed cell group; and
receive a message regarding completion of a cell group change from the terminal,
wherein, in case that a transmission of the QoE measurement reporting message is not successfully performed based on a configured SRB by the terminal, RRC segmentation of the QoE measurement reporting message is used, and the RRC segmentation of the QoE measurement reporting message is allowed in the changed cell group, all segments of the QoE measurement reporting message are transmitted to the changed cell group, based on the SRB to report the result of QoE measurement.

14. The base station of claim 13, wherein all segments of the QoE measurement reporting message are discarded in case that the RRC segmentation is not allowed in the changed cell group.

15. The base station of claim 13, wherein the QoE measurement reporting message is transmitted based on the SRB to report the result of QoE measurement in case that RRC segmentation of the QoE measurement reporting message is not used,
wherein the cell group includes at least one of a master cell group (MCG) or a secondary cell group (SCG),
wherein the configured SRB indicates one of an SRB4 or an SRB5, and
wherein the SRB to report the result of QoE measurement indicates one of the SRB4 or the SRB5.
